(19) Europäisches Patentamt
European Patent Office
Office européen des brevets

(11) Publication number: 0 439 309 A2

# (12) EUROPEAN PATENT APPLICATION

(21) Application number: 91300433.9

(22) Date of filing: 18.01.91

(51) Int. Cl.$^5$: H04R 1/08, H04R 27/00, G11B 31/00

(30) Priority: 22.01.90 JP 4405/90 U
07.02.90 JP 11321/90 U
26.10.90 JP 290230/90

(43) Date of publication of application: 31.07.91 Bulletin 91/31

(84) Designated Contracting States: DE FR GB

(71) Applicant: SEIKO EPSON CORPORATION
4-1, Nishishinjuku 2-chome
Shinjuku-ku Tokyo (JP)

(72) Inventor: Takao, Hideo, c/o Seiko Epson Corporation
3-5, Owa, 3-chome
Suwa-shi, Nagano-ken (JP)

(74) Representative: Miller, Joseph et al
J. MILLER & CO. Lincoln House 296-302 High Holborn
London WC1V 7JH (GB)

## (54) Apparatus for reproducing and amplifying sound.

(57) Apparatus for reproducing and amplifying sound comprising a vocal sound input device (60) for inputting the sound of the voice of the user of the apparatus ; recorded instrumental sound reproducing means (50b,50d,$R_3$, $R_4$) ; and mixing and amplifying means (70) for mixing and amplifying signals from the vocal sound input device (60) and from the recorded instrumental sound reproducing means (50b,50d,$R_3$,$R_4$) characterised in that the mixing and amplifying means (70) is also arranged to receive signals from a recorded vocal sound reproducing means (50a,50c,$R_1$,$R_2$), adjustment means (90a,90b,90c) being provided for adjusting the relative intensity of signals which are transmitted to the mixing and amplifying means (70) from the vocal sound input device (60) and from the recorded vocal sound reproducing means (50a,50c,$R_1$,$R_2$).

EP 0 439 309 A2

Fig. 21

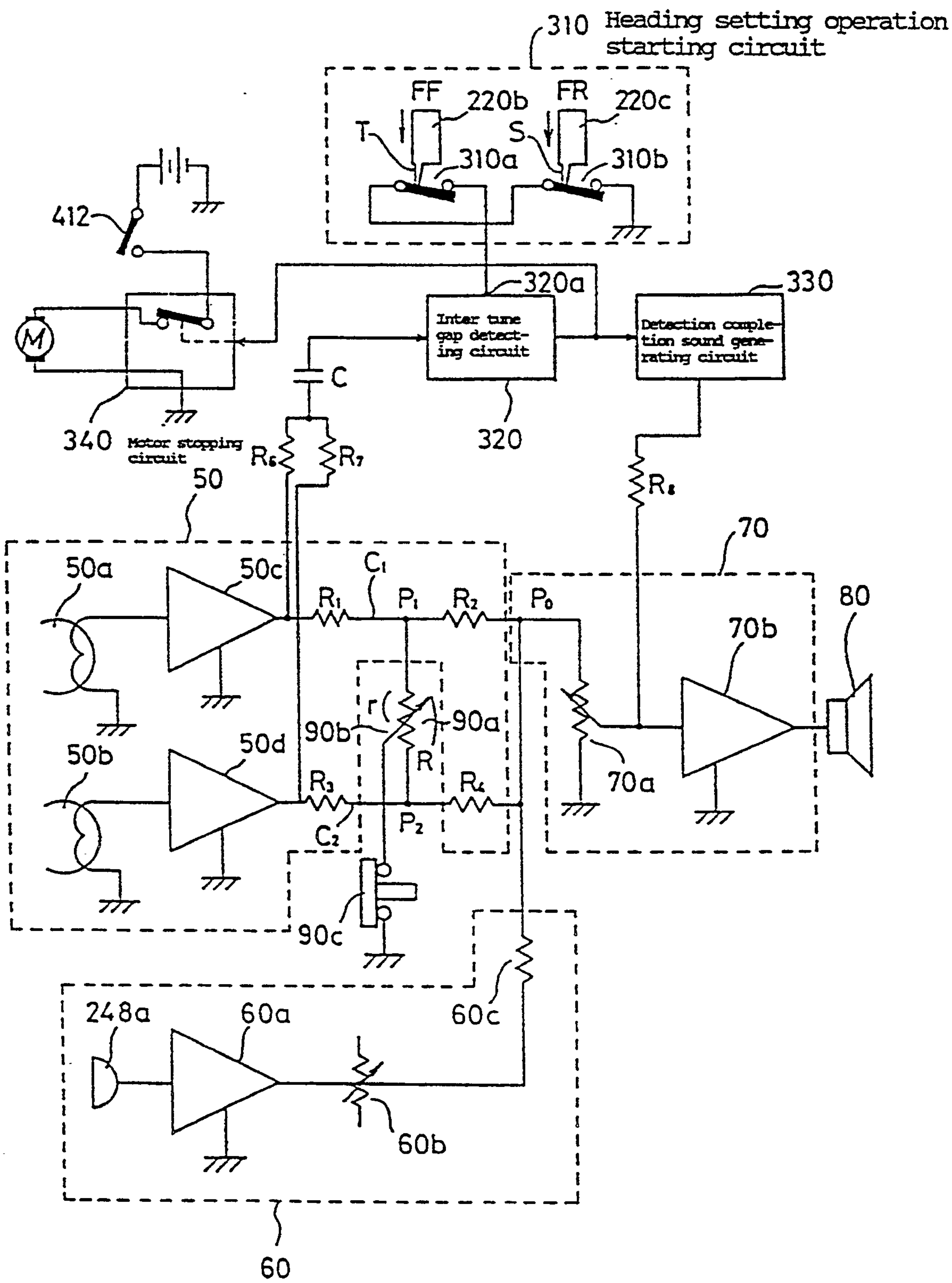

310 Heading setting operation starting circuit
FF
FR
220b
220c
T
S
310a
310b
412
320a
330
Inter tune gap detecting circuit
Detection completion sound generating circuit
M
C
340
Motor stopping circuit
$R_6$
$R_7$
320
$R_8$
50
70
50a
50c
$C_1$
$R_1$
$P_1$
$R_2$
$P_0$
80
70b
r
90a
90b
R
50b
50d
$R_3$
$R_4$
70a
$C_2$
$P_2$
90c
248a
60a
60c
60b
60

# APPARATUS FOR REPRODUCING AND AMPLIFYING SOUND

The present invention relates to an apparatus for reproducing and amplifying sound.

Although the invention is not so restricted, it relates more particularly to an apparatus adapted to be used for a "kara-oke" (literally "empty orchestra") performance in which a singer is accompanied by a taped recording. The latter is normally of an orchestra in which there is no singer and which is therefore "empty".

According to one aspect of the present invention, there is provided apparatus for reproducing and amplifying sound comprising a vocal sound input device for inputting the sound of the voice of the user of the apparatus ; recorded instrumental sound reproducing means ; and mixing and amplifying means for mixing and amplifying signals from the vocal sound input device and from the recorded instrumental sound reproducing means characterised in that the mixing and amplifying means is also arranged to receive signals from a recorded vocal sound reproducing means, adjustment means being provided for adjusting the relative intensity of signals which are transmitted to the mixing and amplifying means from the vocal sound input device and from the recorded vocal sound reproducing means.

Preferably the apparatus is a portable apparatus comprising casing means provided with a speaker and with the recorded instrumental sound reproducing means, the recorded vocal sound reproducing means, the mixing and amplifying means and the adjustment means ; the casing means being provided with the vocal sound input device at a position substantially spaced from said speaker.

Preferably, the casing means has a manually grippable portion by means of which the apparatus is handled, the casing means being of elongated shape and the manually grippable portion extending longitudinally thereof, the vocal sound input device and the speaker being disposed adjacent opposite ends of the casing means.

The adjustment means may comprise a switch which is operable to prevent the input to the mixing and amplifying means of signals from the recorded vocal sound reproducing means.

The adjustment means may also comprise a variable resistor for varying the relative intensity of signals inputted into the mixing and amplifying means from the recorded vocal sound reproducing means and from the recorded instrumental sound reproducing means.

The apparatus may be adapted for use with a recording containing a plurality of musical items with gaps therebetween ; the apparatus comprising a drive motor for driving the said recording ; a starting signal generating means for producing a starting signal to start a scanning of the recording ; and a detecting circuit, operative upon receiving a said starting signal, to detect in the course of said scanning a non-signal or a low level condition of the output from the recorded instrumental and vocal sound reproducing means and thus to produce a detection signal indicating a gap in the recording, there being motor stopping means for stopping the supply of power to the drive motor in response to a said detection signal.

Preferably there are drive control means which, when in an operative state, ensures that the motor, when the latter is also operative, drives the recording at a fast forward or a fast rearward speed, the motor stopping means stopping the drive motor in response to a said detection signal at a time when the drive control means is held in its operative state.

There may be a detection completion sound generating circuit for producing an audible indication that a said detection signal has been produced.

According to another aspect of the present invention, there is provided apparatus for reproducing and amplifying sound comprising recorded sound reproducing means for reproducing sound from a recording containing a plurality of items with gaps therebetween ; a drive motor for driving a said recording through the recorded sound reproducing means ; a starting signal generating means for producing a starting signal to start a scanning of the recording ; and a detecting circuit, operative upon receiving a said starting signal, to detect in the course of said scanning a non-signal or a low level condition of the output from the recorded sound reproducing means and thus to produce a detection signal indicating a gap in the recording characterised by motor stopping means for stopping the supply of power to the drive motor in response to a said detection signal.

In its preferred form the apparatus of the present invention may be used by a singer to provide a "kara-oke" performance while holding the apparatus in one hand. Moreover, in its preferred form, the apparatus provides a compact, miniature and lightweight "kara-oke" music set which reproduces and amplifies audio-sound from an audio-recording medium, and which simultaneously amplifies singing sound from the user.

The apparatus may comprise a circuit system having an instant pop-up function for reproducing a vocal sound using a sound multiplex recording medium, and a circuit system and a mechanism having a music tune selecting function and an automatic tune heading setting function.

Thus, the apparatus of the present invention may be constituted by a portable audio reproducing and amplifying apparatus which enables the so-called "kara-oke" set to be held by one hand, and also to be miniature and lightweight, the apparatus having an auxiliary voice function such that vocal sounds by a professional singer or the like can be reproduced through an incorporated speaker if the user forgets the words of a song being sung.

In the preferred apparatus, a music reproducing signal and a vocal reproducing signal are amplified by and issued from the speaker through the mixing and amplifying means, and there are provided further, a signal intensity changing means for changing at least the intensity of a vocal sound reproducing signal fed to the mixing and amplifying means by external manipulation of a volume knob or the like, and a signal intensity setting means for forcibly setting the intensity of a vocal sound reproducing signal fed to the mixing and amplifying means to a predetermined value after disabling the signal intensity changing means at the time of external manual operation of a push button or the like. A vocal sound which cannot be normally perceived can be instantly heard due to adjustment to the signal intensity changing means, by operating the signal intensity setting means so as to set the intensity of a vocal sound reproducing signal to a certain value.

Further, the present invention also relates to a device for automatically stopping a drive motor for a reproducing device upon completion of setting a heading of a tune. That is, there may be provided an inter tune gap detecting circuit, an initiation signal generating means for generating a signal for initiating a tune "intro-scan" operation at the time of a manual operation of a high speed forward feed or high speed rearward feed during a reproducing mode, and a motor stopping circuit for stopping the supply of power to the drive motor for the vocal sound reproducing device in association with a detection signal from the inter tune gap detecting circuit. Upon completion of a tune introscan operation, the drive motor may be electrically stopped without forcibly releasing the locking condition of a high speed forward or rearward feed mechanism. Accordingly, battery power can be saved due to a reduction in the consumption of current.

Heretofore, a "kara-oke" system (or set) has comprised, in general, a reproducing device for reproducing a tune (instrumental) recorded on a vocal sound recording medium such as a magnetic tape, an optical disc or the like ; a microphone for inputting vocal sound from a singer ; a mixing and amplifying device for combining a tune signal from the reproducing device with a vocal sound signal from the microphone and amplifying the thus combined signal ; and a speaker for converting the thus amplified signal into sound waves. Although the reproducing device and the mixing and amplifying device are sometimes integrally incorporated with each other (being disposed in a single unit housing), the microphone for picking up external sound and the speaker as a sound amplifying means are constituted as separate independent devices, respectively. It is preferable that the reproducing device can select several tunes successively, and can reproduce them with a high quality, and it is desirable that the microphone is a miniature and lightweight wireless portable microphone which can smoothly follow a singing pose of a person. Accordingly, it is necessary that these devices are formed as separate structures, respectively having the necessary functions.

However, among those who enjoy "kara-oke" music, some want it to be available readily in any place. However, a conventional "kara-oke" music system requires a very large installation space as a whole, and in many cases cannot be easily moved. That is, the conventional "kara-oke" music system has a very large size and a very great weight of many Kg. Consequently, an adult person can move it only with difficulty. Accordingly, it is difficult to make the system portable since it is mainly in general of a stationary type. Even though the "kara-oke" music system can be moved to a new installation place, connection between electrical cords or the like and adjustments are inevitable.

Any attempt to make a "kara-oke" music system portable encounters many design difficulties, and it is indispensable to make the reproducing device, the microphone and the speaker miniature and lightweight and to integrate them in one unit. The apparatus must also have a "kara-oke" music function which can amplify vocal sound from a singer and reproduce the sound of a tune, simultaneously. In an arrangement in which the reproducing device, the microphone and the speaker are united together while being made miniature and lightweight, the positional relationship between the microphone and the speaker, the distance therebetween, the directivity and the like should be taken into consideration in order to reduce as much as possible a howling phenomenon caused by a feed-back of amplified sound from the speaker to the microphone. Further, such a portable "kara-oke" music system requires a power source battery since the user wants to perform "kara-oke" music even in a place where no external power source is available. Accordingly, it is necessary to ensure a reduction in the power consumption of the incorporated power source. Further, in many cases, hand books of songs are prepared normally in the place where a conventional stationary type "kara-oke" music system is installed in order that a person who does not remember the lines of a song can perform "kara-oke" music while looking at one of the hand books. However, in the case of a portable "kara-oke" music set, a hand book of songs is not always available, and accordingly there is liable to be an interruption in the singing of a song since a singer may forget a part of the lines of the song during singing. Accordingly, a person who has no confidence in himself of remembering the lines of a song tends to hesitate to perform. Therefore, with a "kara-oke" music set having no singing assisting means, "kara-oke" music cannot be adequately performed. Accordingly, the invention enables a "kara-oke" music set to have a vocal sound assisting function, instead of a handbook of songs.

In its preferred form, in the apparatus according to the present invention, there is provided the following positional relationship of the main components. That is, in a miniature unit type structure having a speaker, a vocal sound reproducing device, a gripping section and a vocal sound input section, the speaker is stored in a casing body at one of, for example, an upper position and a lower position thereof, and the main parts of the vocal sound reproducing device are disposed in the casing body at the other position, such as a position which is on the upper side, the lower side, one of both sides or the rear side of the speaker, or in a casing integrally incorporated with the casing body. The gripping section is composed of at least one or two parts which are coupled and integrally incorporated with the casing body, or the casing. Further, the vocal sound input section is coupled to the gripping section, the casing body or the casing integrally therewith. In such a positional arrangement, the vocal sound input section is arranged at a position which is sufficiently spaced from the speaker to prevent howling.

In a portable vocal sound reproducing and amplifying apparatus having such a positional arrangement, the vocal sound reproducing device may be constituted as a sound multiplex reproducing apparatus comprising a vocal sound reproducing circuit and a tune reproducing circuit having a singing accompaniment function, and may further comprise a mixing and amplifying means, a signal intensity changing means and a signal intensity setting means. The mixing and amplifying means may mix a vocal sound reproduction signal from the vocal sound reproducing circuit and a tune reproduction signal from the tune reproducing circuit, and may amplify the same. The signal intensity changing means may change at least the intensity of a vocal sound reproduction signal fed to the mixing and amplifying means in association with an external manual operation. Futher, the signal intensity setting means may disable the signal intensity changing means in association with an external manual operation,and may then set the intensity of a vocal sound reproduction signal fed to the mixing and amplifying means forcibly to a predetermined value. The signal intensity changing means may adjust the intensity of the vocal sound reproduction signal so as to set a balance between a vocal sound volume and a tune sound volume.

When, for example, a human voice from a singer is introduced through the vocal sound input section, a loud sound which is obtained by amplifying the singing sound, a vocal sound (a vocal by, for example, a professional singer) and a tune sound may be mixed and may be put out from the speaker. If the vocal sound volume is decreased by adjusting the signal intensity changing means, the so-called "kara-oke" music performance in which the vocal sound, the loud sound and the tune sound are mixed together is realized. In such an arrangement, if a singer forgets, for example, a part of the lines of a song so as to have no self-confidence to continue his singing, when the signal intensity setting means is energized through an external manual operation, the signal intensity adjusting means for adjusting the intensity of a vocal sound reproduction signal is disabled, and then the intensity of the vocal sound reproduction signal is reset to a predetermined value, and accordingly, a vocal sound is also put out from the speaker. Therefore, the singer can continue his singing while copying the vocal sound.

The signal intensity changing means is composed of, for example, a first signal intensity attenuating means for variably attenuating the intensity of a vocal sound reproduction signal, and a second signal intensity attenuating means for attenuating a tune signal reproduction signal fed to the mixing and amplifying means. The amplification factors of signals fed to the mixing and amplifying means may be changed respectively, but first and second signal intensity attenuating means are preferably used since their arrangements are simple. The first and second attenuating means may be arranged separately from each other, but with the purpose of reducing the number of components it is preferably constituted by a single variable resistor.

The signal intensity setting means may be composed of a switch means for cutting off signal attenuation made by the first signal attenuating means. In a specific arrangement, the switch means is connected in series to a slider of the single variable resistor which is the signal intensity changing means. If this switch means is of a push button type, the manually operable part of the push button is desirably positioned on the gripping section or in an area in the vicinity of the grip section, in which a thumb of the user can manipulate the push button, since this improves operability.

Further, with the purpose of reducing the consumption of power upon release from locking of a feed mechanism system for the recording after completion of a tune "intro-scan" or scanning operation, there may be used an initiation signal generating means for generating a signal for initating a tune "intro-scan" operation at the time of a high speed forward feed operation or a high speed rearward feed operation during reproduction mode, an inter tune gap detecting circuit for detecting a non-signal condition or a low level condition of a reproduction signal from the vocal sound reproducing device in association with the delivered operation initiation signal, and a motor stopping circuit for stopping the supply of power to a drive motor for the vocal sound reproducing device in accordance with a detection signal from the inter tune gap detecting circuit.

In the known arrangement, a lock condition of a mechanism for the high speed forward feed operation and high speed rearward feed operation has been forcibly released by a solenoid plunger or the like when an inter tune gap detection signal is delivered. however, in the arrangement according to a prefered feature of the present invention, although the mechanism is held in its locked condition as it is, the incorporated motor stopping circuit cuts off the supply of power to the drive motor so as to electrically and directly stop the same. Accordingly, no substantial current is consumed for stopping the motor upon the stopping of a tune scanning operation, and accordingly, it is possible to save the power of an incorporated power source.

In the above-mentioned condition, in order to surely transmit data at the completion of a tune "introscan" operation to a singer or the like, there is provided a detection complete sound generating circuit for issuing an alarm sound or an artificial voice from the above-mentioned speaker in accordance with a detection signal from the inter tune gap detecting circuit. The initiation signal generating means may be composed of, for example, an AND circuit consisting of a first switch means opened and closed in association with a high speed forward feed operation and a second switch means opened and closed in association with a high speed rearward feed operation, these switches being of a leaf type. Further, as a pushing member for each leaf type switch, there may be provided a projection formed on the rear side of a push button switch for each mode selecting lever. Although the drive motor may be automatically stopped after completion of a tune scanning operation, the high speed forward feed or high speed rearward feed operation mechanism system is held in its locked condition, but the initiation signal generating means is in its active condition. Accordingly, there is provided a means for stopping the continuation of generation of the initiation signal for initiating a tune scanning operation. In the specific arrangement of this means, there may be added a start lever for releasing the locked conditions of a high speed forward feed operation selecting lever,and returning them into only a reproducing mode. Further, a push button may project from a casing body fitted on an engagement member of the start lever, which is for restarting the reproducing mode by one step motion to the push button.

In a sound multiplex reproducing apparatus incorporating a vocal sound assisting function relating to the above-mentioned arrangement, the signal intensity changing means may adjust the intensity of a vocal sound reproduction signal, and as a result, the balance between a vocal sound volume and a tune sound volume may be set. In this condition, when for example, a voice from a singer is introduced into the vocal sound input section, an amplified singing sound and the vocal sound (vocal by, for example, a professional singer) and a tune sound are mixed and issued from the speaker. if the vocal sound volume is decreased by adjusting the signal intensity changing means, the so-called "kara-oke" music operation in which the amplified singing sound and the tune sound (instrumental) are mixed together, can be achieved. In this arrangement, if the singer forgets, for example, a part of the lines of a song and has no self-confidence to continue his singing, when the signal intensity setting means is energized through external manipulation, the signal intensity changing means for adjusting the intensity of a vocal reproduction signal is disabled, and accordingly, the intensity of the vocal sound reproduction signal is reset to a predetermined value, so that the recorded vocal sound is also issued from the speaker. Thereby, the singer can continue his singing while copying the recorded vocal sound.

Further, in the automatic tune scanning device, since the motor stopping circuit is used for stopping the supply of power to the drive motor for the vocal sound reproducing device in association with a detection signal from the inter tune gap detecting circuit, when an inter tune gap detection signal is issued, the locked condition of the mechanism for the high speed forward feed operation or the high speed rearward feed operation is not released forcibly by a solenoid plunger or the like, but the internal motor stopping circuit directly stops the drive motor while the above-mentioned mechanism is held in its locked condition as it is. Accordingly, upon completion of a tune scanning operation, no excessively large current is consumed for driving the mechanism, and accordingly, it is possible to save the power of the incorporated power source or the like.

The invention is illustrated, merely by way of example, in the accompanying drawings, in which :-

Figure 1a is a front view illustrating the exterior of a first embodiment of an apparatus for reproducing and amplifying sound according to the present invention ;

Figure 1b is a right side view illustrating the apparatus shown in Figure 1a ;

Figure 1c is a perspective view illustrating the apparatus shown in Figure 1a, as viewed obliquely in front of the same ;

Figure 1d is a perspective view illustrating the apparatus shown in Figure 1a, as viewed obliquely from the rear of the same ;

Figure 2 is a perspective view illustrating the apparatus of Figure 1a in actual use, when gripped by a singer carrying out a "kara-oke" performance ;

Figure 3 is an exploded perspective view illustrating a casing structure of the apparatus of Figure 1a ;

Figure 4 is a partially sectional side view illustrating the positional relationship between an incorporated speaker and a microphone section in the apparatus of Figure 1a ;

Figure 5a is a sectional view illustrating a microphone section structure in detail for the apparatus of Figure 1a ;

Figure 5b is a sectional view illustrating another microphone structure in detail for the apparatus of Figure 1a ;

Figure 6 is a perspective view illustrating the relationship between a sponge protector member and a cap in the microphone section in the apparatus of Figure 1a ;

Figure 7 is an oblique view illustrating an opening and closing cover in the Figure 1a apparatus, the cover being shown in its open state ;

Figure 8 is a perspective view illustrating the said opening and closing cover which is hinged to a casing body by means of a synthetic resin hinge;

Figure 9a is a front view illustrating the exterior of a second embodiment of an apparatus for reproducing and amplifying sound according to the present invention ;

Figure 9b is a right side view illustrating the apparatus shown in Figure 9a ;

Figure 9c is a perspective view illustrating the apparatus shown in Figure 9a, as viewed obliquely in front thereof ;

Figure 9d is a perspective view illustrating the apparatus shown in Figure 9a, as viewed obliquely from the rear thereof ;

Figure 9e is a perspective view illustrating the apparatus of Figure 9a as viewed obliquely from the rear thereof from another direction ;

Figure 9f is a bottom view illustrating the apparatus of Figure 9a ;

Figure 10 is an exploded perspective view illustrating a casing structure of the apparatus of Figure 9a ;

Figure 11 is a perspective view illustrating the relationship between a sponge protector member and a cap in a microphone section of the apparatus of Figure 9a ;

Figure 12 is a sectional view illustrating the structure of the microphone section of the apparatus of Figure 9a in detail ;

Figure 13a is a front view illustrating a large diameter resilient leg section attached to the bottom surface of the apparatus of Figure 9a ;

Figure 13b is a perspective view illustrating the said large diameter resilient leg section ;

Figure 13c is an exploded front view illustrating a small diameter resilient leg section attached to the bottom surface of the apparatus of Figure 9a;

Figure 13d is an exploded perspective view illustrating the said small diameter resilient leg section ;

Figure 14 is a partial view illustrating the configuration of the attachment of the said small diameter resilient section to the casing body ;

Figure 15 is a front view illustrating the standing stability of the apparatus of Figure 9a ;

Figure 16 is a perspective view illustrating an opening and closing cover of the apparatus of Figure 9a, the cover being shown in its open state ;

Figure 17 is a sectional view illustrating the opening and closing configuration of the said cover ;

Figure 18a is a perspective view illustrating a construction having slit holes which are formed in the rear surface of the casing body of the apparatus of Figure 9a ;

Figure 18b is a sectional view illustrating the said slit hole structure ;

Figure 19 is a circuit block diagram illustrating a typical basic circuit arrangement of the apparatus of the present invention ;

Figure 20 is a perspective view illustrating a thumb manipulation method by which a push button member of a vocal assisting switch and a volume adjusting knob are operated while the gripping section of the apparatus is being held by one hand ;

Figure 21 is a circuit block diagram illustrating both an electronic circuit system for an automatic tune "intro-scan" operation starting device and basic circuit of the apparatus shown in Figure 19;

Figure 22 is an exploded perspective view illustrating a tape deck which may be incorporated in the apparatus of the present invention ; and

Figures 23a to 23f are substantially plan views of the tape deck respectively, for illustrating lock and unlock operations in association with button manipulation of the tape deck.

Terms such as "left" and "right" and "upper" and "lower" as used in the description below, are to be understood to refer to directions as seen in the accompanying drawings.

First Embodiment

A portable apparatus 1 for reproducing and amplifying sound according to a first embodiment of the present invention, whose external appearance is illustrated in Figure 1, is constituted by a compact arrangement having certain predetermined maximum external dimensions, that is, an overall height of 283 mm including projections, a width of 97 mm and a depth of 128 mm, and a weight of 640g including a dry battery. The apparatus 1 is roughly composed of an apparatus body section or casing body 12, a gripping portion 14 and a microphone section 16. The apparatus body section 12 is composed of a vocal sound medium storage section 120 for a tape cassette stored in a substantially rectangular parallelopiped body casing 12a and a speaker storage section 130 which is positioned below the vocal sound medium storage section 120. It is to be noted that a tape deck or the like for reproducing vocal sound, which will be described later, is stored on the rear side of the vocal sound medium storage section 120.

Push button members 120a, 120b, 120c, 120d for push button switches, and volume knobs 130a, 130b project from the casing side surface of the vocal sound storage section 120. The push button member 120a is for stopping the feed of a magnetic tape, the push button member 120b for fast-feeding the magnetic tape, the push button member 120c for rewinding the magnetic tape, and the push button member 120d for playing the reproduction of a vocal sound signal recorded on the magnetic tape. Further, the volume knob 130a is for adjusting the echo of the microphone sound and the volume knob 130b is for adjusting the balance between the microphone sound volume and the tape reproduced sound volume.

The grip section 14 and the microphone section 16 which is integrally incorporated with the grip section 14 form a substantially cylindrical body, the microphone section 16 being positioned in this cylindrical body. Further, leg parts 132a, 132b project from the left and right sides of the bottom surface of the apparatus body 12.

A manual operating section 18 is provided on the side surface of the cylindrical casing between the grip section 14 and the microphone section 16. The manual operating section 18 is provided thereon with a knob 18a for a slide switch, and with rotary volume controls 18b, 18c positioned above and below the knob 18a. The knob 18a is adapted to change over the operation mode between the mode in which the apparatus is used as a "kara-oke" ("empty orchestra") music set and the mode in which it is used only as a loudspeaker for making the sound inputted into the microphone louder. The volume control 18b is for adjusting the balance between the vocal sound volume and the musical performance sound volume when using a sound multiplex magnetic tape. The volume control 18c is for adjusting the volume of the microphone sound. The cylindrical grip section 14 is coupled integrally to the apparatus body section 12 by means of upper and lower coupling parts 10a, 10b. Between the grip section 14 and the apparatus body section 12, there is defined a through space 15 which enables the grip section 14 to be gripped relatively freely.

The above-mentioned miniature and lightweight apparatus 1 is used in the way shown in Figure 2. That is, when used in the "kara-oke" or "empty orchestra" mode, the grip section 14 is held by one or both hands so as to carry the apparatus 1, and a song is sung into the microphone section 16, the singer being accompanied by the taped music of the "empty orchestra" so as to produce a quasi-professional effect. Since the apparatus is miniature and lightweight, the apparatus 1 can be carried suitably for a singing pose, similar to that employed when an ordinary wireless microphone is used.

Figure 3 is an exploded perspective view illustrating the casing of the apparatus. The casing of the portable audio reproducing and sound volume increasing apparatus 1 is mainly composed of a plastics body casing 12a, a plastics right half 14a and a plastics left half 14b. Accordingly, the assembly thereof can be facilitated. The right and left halves 14a, 14b are assembled integrally together by means of a screw $S_1$. The body casing 12a is assembled to the thus obtained assembly by means of screws $S_2$, $S_3$. The body casing 12a has an opening and closing cover 144 which is attached thereto and which can be opened and closed freely in the vertical direction through the intermediary of a plastics hinge 142. When the cover 144 is closed, a tape cassette storage chamber 146 is maintained in an air-tight condition. A speaker 132 (Figure 4), which will be described below, is disposed in the speaker storage section 130 in the body casing 12a, the speaker 132 having its front surface covered thereover with a mesh-like speaker cover 134. A cap (microphone holder) 148 incorporated with an electret capacitor microphone 148a is inserted into the upper end part of the cylindrical body which is formed at the right and left halves 14a, 14b, and the cap 148 is covered with a sponge protector member 150.

As best shown in Figure 1(a), the push button members 120a, 120b, 120c, 120d, for the push button switches, and the knobs 130a, 130b project from the side surface of the body casing 12a. Although a miniature planar manual operating section composed of touch switches and the like can be used in the apparatus, the latter is more difficult to see and use. If the apparatus is used in the dark, such a miniature planar manual operating section is hardly visible. The use of push button members which project from the side surface of the casing to a certain extent is more suitable since they can be easily recognized due to the difference in dark and bright contrast. Further, the push button members 120a, 120b, 120c, 120d and the knobs 130a, 130b have different colours so as to be highly distinguishable during use.

Figure 4 is a side view showing the positional relationship between the speaker and the microphone section in the apparatus. The miniature speaker 132 has a relatively powerful magnet 132a which is located in the speaker storage section 130 and is positioned in the lower section of the apparatus body 12. The miniaturization of the speaker 132 is required for the portability of the apparatus. In order to obtain a sufficient speaker sound volume during the use of "kara-oke", such a powerful magnet 132a is important in order to reduce power consumption. Although the use of the powerful magnet 132a for a small size speaker 132 increases the total weight of the apparatus, so as to make it somewhat more difficult to hold in one hand and somewhat less portable, nevertheless the entire apparatus can be made lightweight by making the other components lightweight and by reducing the number of necessary components. The fact that the speaker storage section 130 is positioned in the lower part of the apparatus body section 12 and, further, that a relatively heavy magnet 132a is used is advantageous in the lowering of the centre of gravity of the elongated apparatus, and as mentioned later, this enables stationary stability and standing stability to be obtained.

The cylindrical microphone section 16 includes the above-mentioned cap 148 which is provided in its top part with the capacitor microphone 148a. The direction of the pressure receiving area (directivity) of the microphone 148a is set along the axis of the microphone section 16. Accordingly, the centre axis of the directivity of the capacity microphone 148a and the centre axis of the directivity of the speaker 132 are orthogonal to each other. The position of the capacitor microphone 148a is in the uppermost part of the apparatus, the position of the speaker 132 being in the lowermost part of the apparatus, and the distance therebetween is about 24 cm. The reason why such a positional arrangement is adopted is to prevent howling. The longer the said distance, the greater is the degree of prevention of howling. However, a long distance between the microphone 148a and the speaker 132 causes the apparatus to have a large size so that the apparatus is not handy, and accordingly, the distance should naturally be limited to a certain degree. Further, the directivity of the capacitor microphone 148a is most preferably in the direction opposite (i.e. at an angle of 180 deg.) to the directivity of the speaker 132. Accordingly, the microphone section 16 may be fixed so as to be inclined rearwardly to, for example, the grip section 14, or the position of the capacitor microphone 142a itself may be changed.

The relative positional relationship of the components required for a portable type miniature and lightweight "kara-oke" music set similar to the apparatus described above is such that the speaker section is fixed before the grip section and the microphone section, and the microphone section is desirably above the grip section while the speaker and the microphone section are spaced from each other by a distance which prevents the occurrence of severe howling. The microphone section may be positioned either before or behind the gripping section, but it should preferably not be arranged before the speaker section. The casing body serving as a speaker box, in which the speaker section is disposed, may also store the vocal sound reproducing device at another position. Alternatively, this vocal sound reproducing device may be disposed in a casing integrally incorporated with the casing body. Accordingly, by sacrificing the external appearance, the speaker section may be positioned before the storage section for the vocal sound reproducing device. In such a positional arrangement, the grip section is integrally incorporated with the storage section for the vocal sound reproducing device, and the microphone section is integrally incorporated at either the grip section or the upper or lower section of the vocal sound reproducing device. However, a microphone adapted for use in "kara-oke" is usually rod-like since it is preferably held by one hand in order to feel at ease.

Accordingly, as shown in Figure 4, in this embodiment, it is arranged that the grip section 14 and the microphone section 16 are connected together in a rod-like shape. With this positional relationship, howling which is caused by an increase in the volume of the sound (outlet sound) directed outwardly of the mesh-like cover 134 from the speaker 132 can be substantially eliminated. However, even with this arrangement, there is the problem that the speaker storage section 130 communicates with the inside of the microphone section 16 within the casing through the intermediary of the coupling parts 10a, 10b although they are very small, and accordingly, an increased sound from the speaker 132 is fed back as an internal sound to the capacitor microphone 148a. The inside of the coupling part 10a is hollow, which is therefore effectively used for the passage therethrough of the wiring from the microphone, and further, the inside of the coupling part 10b is also hollow since the wiring from the power source is led therethrough. It is to be noted that an empty space in the inside of the grip section 14 is used as a battery storage section (which is not shown). Accordingly, the speaker sound is likely to be fed back to the microphone 148a through these coupling parts 10a, 10b, as indicated by the broken line arrow shown in Figure 4. Not only does the speaker sound propagate through a space in the casing but the speaker also causes secondary vibration of the casing itself. This vibration of the casing also reaches the microphone section 16, possibly causing the occurrence of howling.

Accordingly, in the apparatus there is employed a speaker sound feed-back preventing structure as shown in Figures 4 and 5 in order to prevent howling. That is, as shown in Figures 4 and 5(a), the cap 148 is fitted on a slightly reduced diameter end part 152a of a cylindrical casing 152, and the capacitor microphone 148a is attached to the top part of the cap 148. A perforated partition plate 154 is formed integrally in the cylindrical end part 152a. Under the partition wall 154 there are disposed a sound shield plate 155 in the form of a perforated metal disc (made of iron) and a lower sound absorbing member 156 made of relatively high density foamed plastics material (foamed urethane). The sound absorbing member 156 has excellent elasticity while exhibiting a positioning function for the sound shield plate 155. Further, an upper sound absorbing member 157 made of relatively high density foamed plastics material (foamed urethane) is disposed above the partition plate 154. The wiring 158 is led out from the capacitor microphone 148a through an aperture 154a in the partition plate 154 and an aperture 155a in the sound shield plate 155. It is to be noted that a felt member 158 is bonded to the pressure receiving surface of the capacitor microphone 148a. Feed-back sound propagating in the direction of the arrow in Figure 5(a) is absorbed at first by the lower sound shield member 156 to a certain degree. Further, vibration energy which propagates through the casing is thermally absorbed by the sound shield plate 155 which has a high specific gravity. Feed-back sound waves leaking through the apertures 155a, 154a are absorbed by the upper sound absorbing member 157. Accordingly, howling caused by feed-back sound in the casing and vibration can be prevented as far as possible.

Figure 5(b) is a sectional view illustrating another speaker sound feed-back preventing structure, instead of the above-mentioned structure. In this structure, although a relatively large specific weight iron disc is also used as a sound shield plate 155', no aperture similar to the aperture 154 shown in Figure 5(a) is formed in this plate. Accordingly, the wiring 158 is led through a gap between the peripheral surface of the sound shield plate 155' and the inner periphery of cylindrical end part 152. With the above-mentioned sound shield plate 155 having the aperture 154a, as shown in Figure 5(a), it has been required to carefully position the wire so as to prevent it from making contact with the edge of the aperture 154a. Should there be such contact with each other, a slight vibration of the wiring 158 caused by a feed-back sound wave would be transmitted to the upper part of the sound shield plate 155. Accordingly, with the structure shown in Figure 5(b), the sound shield plate 155' having no aperture is set on a node-like step member 154'.

Figure 6 is a perspective view showing the relationship between the sponge protector member 150 and the cap 148. The sponge protector member 150 is made of relatively low density foamed plastics material (foamed urethane), and is formed therein with a cap fitting recess 150a. The sponge protector member 150 is adapted to relieve the application of excessive sound pressure upon the pressure receiving surface of the capacitor microphone 148a. At the pressure receiving surface of the capacitor microphone 148a which is fixed in a circular hole in the top part of the cap 148, a felt member 158 is bonded as described above, which is also adapted to relieve the application of excessive sound pressure. The upper part of the cap 148 has a substantially dome-like shape, and is formed therein with elongated holes 148c and circular holes 148b extending radially from the capacitor microphone 148a as a centre, both kinds of holes being arranged alternately with respect to one another. The reason why these holes are so formed is that an excessively high sound wave from a singer is prevented from being reflected from the upper surface of the cap 148. This prevents obstruction to the vibration of the pressure receiving surface of the microphone, and so that the feed-back sound propagating to the microphone from the inside of the casing is dispersed, whereby to prevent the occurrence of howling.

Figure 7 is a perspective view showing the opening and closing cover of the apparatus opened, and Figure 8 is a perspective view illustrating the plastics hinge for the opening and closing cover, on an enlarged scale.

The opening and closing cover 144 has a transparent window 144a through which one can see the remaining anmount of a tape to be played. The cover 144 is connected to the body casing 12a defining the tape cassette storage chamber 146 by means of the plastics hinge 142. The reason why the resin hinge 142 is used is to aim at reducing the number of components and making the apparatus lightweight. After a tape cassette 146a has been loaded in the tape cassette storage chamber 146, and the cover 144 has been closed, the tape cassette storage chamber 146 is held in a completely air-tight condition. The speaker storage section 130 serving as a speaker box has a relatively small acoustic space when the speaker 132 is disposed therein. If the acoustic space is made larger, the speaker storage section 130 would inevitably have a large size. Accordingly, the increase of the speaker storage section 130 is naturally limited to a certain degree. Further, if the acoustic space is small, the sound quality in matters such as sound development, profundity or the like deteriorates. Therefore, in the apparatus, the remaining space in the tape cassette storage section 146 is effectively used as an auxiliary sound acoustic space while preventing, as far as possible, the space of the speaker storage section 130 from increasing. That is, a communication hole 132a is formed in a part of the partition wall 132 separating the speaker storage section 130 from the cassette storage chamber 146. Accordingly, the communication hole 132a allows the tape cassette storage chamber 146 in which the tape cassette 146a is loaded, to serve also as an acoustic space. It is therefore possible to obtain a reproduced sound having a relatively high sound quality despite the fact that the apparatus is compact.

As shown in Figure 1(d) and Figure 2, a plurality of slit holes 136 are formed on the rear side of the body casing 12a. That is, the entire surface of the speaker storage section 130 is covered with the mesh-like cover 134 while the rear surface of the speaker storage section is formed therein with the plurality of slit holes 136. The reason for the formation of the plurality of slit holes 136 is that a singer who grips the grip section 14 by one hand can hear his vocal sound increased by the speaker. The dimensions and the number of the slit holes 136 should be carefully considered so as to prevent the occurrence of howling because an increased sound coming from the grip section 14 side, if it is excessive, possibly acts as a feed-back sound transmitted to the microphone. The slit holes 136 have a dissipating action for heat generated from internal electronic parts. Further, in this apparatus, several narrow slit holes 136 are formed, and a fabric (which is not shown) is mounted on the inside thereof in order to prevent dust or the like from entering through the slit holes.

## Second Embodiment

A portable apparatus 2 for reproducing and amplifying sound according to a second embodiment of the present invention will be described hereinbelow. As shown in Figure 9, which shows the external structure of the apparatus, the apparatus 2 also mainly has a compact size, similar to the apparatus 1 of the first embodiment. Thus the apparatus 2 has, as its maximum external dimensions, a height of 300 mm, a width of 100 mm and a depth of 121 mm, the total weight of the apparatus being 700g, including dry batteries. The apparatus 2 also mainly has an apparatus body 22, a grip section 24 and a microphone section 26 which are united together. The apparatus body section 22 is composed of a vocal sound medium storage section 220 for a tape cassette stored in a substantially rectangular parallelopiped body casing 22a and a speaker storage section 230. Push button members 220a, 220b, 220c, 220d, 220e for push button switches and volume rotary discs 230a, 230b project through the casing side surface of the vocal sound medium storage section 220. The push button member 220a is for stopping the feed of a magnetic tape, the push button member 220b for fast-feeding the magnetic tape, the push button member 220c for rewinding the magnetic tape, the push button member 220d for playing the reproduction of a vocal sound signal recorded on the magnetic tape, and the push button member 220e as a start/stop pushing button member for returning a tape to a reproduction mode after completion of the "intro-scan" of a selected tune. Further, the volume rotary disc 230a is for adjusting an echo of the microphone sound, and the volume rotary disc 230b is for adjusting the balance between the microphone sound volume and the tape reproduced sound volume. Each of the volume rotary discs 230a, 230b has an exposed surface having an area greater than that of a finger of an adult person, the surface having a semi-spherical projection m and a semispherical recess n formed thereon. Each of the knobs 130a, 130b in the first embodiment should be rotated while holding the knob between the thumb and the foreginger when it is manipulated. On the contrary, the above-mentioned rotary discs 230a, 230b can be easily rotated by only one of the five fingers when it is manually operated, and consequently it can be used more easily. Further, a volume rotary disc 230c provided on the other casing side surface, as a vocal sound/music performance sound volume adjusting rotary disc for adjusting the balance between a vocal sound and a music performance sound upon reproduction of a sound multiplex tape, is also formed thereon with a semispherical projection m and a semispherical recess n. The push button member 230d for a push button switch positioned below the rotary disc 230c is a vocal sound muting push button member for decreasing a vocal sound volume while increasing a music performance sound volume when use is being made of a normal tape having a vocal song recorded thereon, rather than a sound multiplex tape. It is to be noted that an input jack 230e is provided with an A.C. adapter during use of an external power source.

The grip section 24 and the microphone section 26 which is integrally incorporated with the grip section 24 form a substantially cylindrical body, the microphone section 26 being positioned on the top of this cylindrical body. Further, resilient leg parts 232a, 232b project from the left and right sides of the lower part of the speaker storage section 230, and a resilient leg part 232c projects from the bottom part of the grip section 23. A manual operating section 28 is provided on the side surface of the cylindrical casing between the grip section 24 and the microphone section 26. The manual operating section 28 is provided thereon with a push button member 28b for a vocal sound assist switch for issuing a vocal sound from a tape only when it is continuously pushed for a long time. The virtually cylindrical grip section 24 is coupled integrally to the apparatus body section 22 by means of upper and lower coupling parts 20a, 20b. Between the grip section 24 and the apparatus body section 22, there is provided a through space 25 which enables the grip section 14 to be relatively freely gripped.

Figure 10 is an exploded perspective view illustrating the casing of the apparatus 2. The casing of the portable audio reproducing and sound volume increasing apparatus 2 is, as in the first embodiment, mainly composed of a plastics body casing 22a, a plastics right half 24a and a plastics left half 24b. The right and left halves 24a, 24b are assembled integrally together by means of a screw $S_1$. The body casing 22a is assembled to the thus obtained assembly by means of screws $S_2$ to $S_5$. The body casing 22a has an opening and closing cover 244 which is laterally operable. When the cover 244 is closed, a tape cassette storage chamber 246 is held in a complete air-tight condition. A speaker (which is not shown), similar to that described in the first embodiment, is disposed in the speaker storage section 230 in the body casing 22a, the speaker having its front surface covered by a mesh-like speaker cover 234. A cap 248 incorporated with a capacitor microphone is inserted in the upper end part of the cylindrical body which is formed of the right and left halves 24a, 24b united to each other, and the cap 248 is covered with a sponge protector member 250. As shown in Figure 9(b), the grip section 24 is not of a cylindrical shape having a uniform diameter, but it has a bulged part 24a which fits the palm of a human hand and which is accordingly easily held. A battery cover 24b is attached to the outer surface of the grip section 24, and batteries 24c are disposed inside the grip section 24.

Figure 11 is a perspective view showing the relationship between the sponge protector member 250 and the cap 248. The sponge protector member 250, similar to the sponge protector member 150 in the first embodiment, is made of relatively low density foamed plastics (foamed urethane), and is formed therein with a cap fitting recess 250a. The capacitor microphone 248a is fitted in a circular hole in the top part of the cap 248. A felt member 258 is bonded to the pressure receiving surface of the capacitor microphone 248a. The upper part of the cap 248 has a substantially dome-like shape, and is formed therein with two kinds of elongated holes 248b, 248c extending radially from the capacitor microphone 248a as a centre, both kinds of elongated holes being arranged alternately of one another. The reason for providing these elongated holes 248b, 248c, which are similar to the elongated holes 148b and the circular holes 148c in the first embodiment, is that an excessive volume of sound from somebody singing is prevented from being reflected by the upper surface of the cap 248, so that the vibration of the pressure receiving surface of the microphone is not hindered. Thus a feed-back sound propagating to the microphone from the inside of the casing is dispersed so as to prevent the occurrence of howling. In this embodiment, the elongated holes 248c are formed, instead of the circular holes 148c in the first embodiment, in order to set the numerical aperture in the dome-like upper part of the cap 248 to a large value. Further, the height h of the dome-like part is set to a value which is greater than that of the cap 148 in the first embodiment, thereby to enhance further the above-mentioned effect.

The cap 248 is fitted on a slightly reduced diameter end part 252a of the cylindrical casing 252 of the microphone section 26. An inner peripheral groove 252b is formed in the cylindrical end part 252a, and is fitted therein with a sound shield plate 255 which is a metal disc (made of iron). An upper sound absorbing member 257 made of relatively high density foamed plastics material (foamed urethane) is disposed on the upper side of the sound shield plate 255. The sound absorbing member 257 has excellent elasticity. Four node-like partition walls 259a to 259d are integrally incorporated with the cylindrical casing 252 below the inner peripheral groove 252b. The four node-like partition walls 259a to 259d are arranged parallel to the positioned sound shield plate 255, the partition walls 259a to 259d defining therein wire passage openings 260a to 260d which are positioned at opposite furthest positions on the diameter thereof, or alternately between those adjacent thereof. A wiring member 261 from the capacitor microphone 248a is led through passages between the upper sound absorbing member 258 and the inner surface of the casing and between the sound shield plate 255 and the inner surface of the casing, and then is led meandering through the wire passage openings 260a to 260d. A part of a feed-back sound wave propagating from the speaker (which is not shown) advances in the direction of the arrow in Figure 12. The greater part of the propagating sound wave is reflected or blocked by the node-like partition wall 259a. However, a part thereof is attenuated gradually through the wire passage port 260a, and comes out from the final wire passage opening 260d. Then it reaches the sound shield plate 255. However, a substantial part of the propagating wave is decayed by the four partition wall structure, that is by a labyrinth structure. When the propagating wave reaches the sound shield plate 255 which has a large specific gravity, the sound wave energy is absorbed, and is dissipated as heat. A part of the feed-back sound leaks to the upper side of the sound shield plate 255, but it is absorbed by the sound absorbing member 257. Accordingly, the volume of the feed-back sound coming to the capacitor microphone 248a becomes very slight, so that howling caused by a feed-back sound propagating through the inside of the casing causes no substantial problem. The partition wall structure or the labyrinth structure in this embodiment is formed integrally with the cylindrical casing 252, and accordingly, the number of components is reduced by comparison with that of the structure of the microphone section in the first embodiment.

As shown in Figure 9, the resilient leg parts 232a, 232b, which have a diameter of about 1 cm, project from the left and right sides of the lower part of the speaker storage section 230. Moreover, the resilient leg part 232c, which has a diameter of about 3 cm, projects from the bottom part of the grip section 24. Accordingly, the apparatus 2 can be set in a stationary posture with a three point support configuration as shown in Figure 9(f). The apparatus 1 in the first embodiment also has the integrally formed leg parts 132a, 132b, and accordingly, it may be set with three point support configuration by these two leg parts 132a, 132b and by the bottom part of the grip section 14. However, the stationary stability and the self-standing stability of the apparatus 1 are inferior to those of the apparatus 2 since the bottom part of the grip section 14 makes contact with the surface of a table or the like under a surface contact condition and since a casing made of hard materials is brought into direct contact with the surface. With the arrangement in the second embodiment in which the resilient leg parts 232a, 232b, 232c are attached, without being integrally incorporated, with the casing, the stationary stability and the standing stability can be improved. The large diameter resilient leg part 232c is made of rubber, and is composed of a part-spherical member 233a projecting outside of the casing, a reduced diameter part 233b held between the split edges of the casing, and a removal prevention part 233c located in the casing, as shown in Figures 13(a) and 13(b). The small diameter resilient leg parts 232a, 232b are also made of rubber, and as shown in Figures 13(c) and 13(d), each of the leg parts has a resilient member 235 composed of a part-spherical member 234a projecting outside of the casing, a reduced diameter part 234b held between the split edges of the casing, and a removal prevention part 234c located in the casing.

The resilient member 235 is formed therein with a hole in which a core member 234d is fitted. The core member 234d is made of a steel pipe and is formed in its peripheral surface with a zig-zag split 234f. The reason for using this zig-zag split 234f is that it gives a suitable strength to the resilient member 235 since in itself it has low durability and is likely to be damaged in view of its small diameter. Further, the zig-zag split 234f formed in the core member 234d also has an anchoring function for preventing the core member 234d coming away from the resilient member 235, and can give an additional slight resiliency to the core member itself. Thus, the provision of the zig-zag split 234f is useful in this regard.

With this leg part structure, when the apparatus 2 is positioned, bumping drags transmitted from the contact surfaces of the leg parts can be elastically relieved, and accordingly the risk that the bumping will affect electronic parts in the apparatus can be reduced. Consequently, it is possible to really provide an apparatus which has a low failure rate and a high durability. Further, since the frictional coefficient between the rubber leg parts 232a, 232b, 232c and the contact surface is high by comparison with the leg part structure in the first embodiment, there is less risk of slipping of the apparatus 2 itself, and accordingly it is possible to prevent unexpected overturning thereof as far as possible.

For example, as shown in Figure 15, even though the apparatus 2 is slightly inclined, the apparatus 2 itself has a tendency to recover to its upright standing posture with a tumbler action, due to not only the above mentioned three point support and slipping preventing function but also to a low centre of gravity positioning because of its relatively heavy weight. The recovery force can effectively prevent the apparatus 2 from overturning, and accordingly it is possible to reduce the possibility of damage or the like thereof. In particular, if a "kara-oke" performance is carried out in darkness, the apparatus 2 itself is sometimes not clearly visible. Even in such a case, however, the apparatus 2 can be easily set on a table or the like without having to use particular care and this enables the apparatus 2 to be satisfactorily used.

Figure 16 is a perspective view showing a state in which the opening and closing cover has been opened. A tape cassette 260 is loaded into the tape cassette storage chamber 246, as shown. Even when the tape cassette 260 has been so loaded, additional space exists in the tape cassette storage chamber 246. The storage chamber 246 is also functioning as an extension of a speaker acoustic space, similar to the cassette storage chamber 146 in the first embodiment. The partition wall 232 separating the speaker storage section 230 from the cassette storage chamber 246 is formed therein with communication holes 232a, 232b at opposite ends thereof. Further, a chassis 262 separating the tape cassette storage chamber 246 from a deck storage chamber 30 (refer to Figure 10) in which a rear side tape deck and an electronic part packaged board are stored, is formed therein with openings 262a, 262b. The communicating holes 232a, 232b and openings 262a, 262b allow the extra space in the tape cassette storage chamber 246 in which the tape cassette is loaded to serve also as an acoustic space for the speaker.

Figure 17 is a sectional view showing a state in which the opening and closing cover has been opened and closed. A pair of support parts 262a integrally incorporated with the chassis 262 and a pair of support parts 244a of the opening and closing cover 244 are coupled together by a pin 244b, and accordingly the cover 244 can take a mid-opening position as indicated by the one-dot chain line in Figure 17 and a fully open position indicated by the two-dot chain line in the same figure. The cover 244 is integrally incorporated with a spiral arm 244c which passes through a through-hole 262b formed in the chassis 262, having its front end part entering into the deck storage chamber 30. A one-turn torsion spring 270 is hooked at opposite ends respectively in a hooking hole 232b formed in the partition wall 232 on the deck storage chamber side 30 and in a hooking hole 244d formed in the front end part of the spiral arm 244. Under the action of the torsion spring 270, a self-opening-and-closing force for the cover 244 can be obtained. At the mid-opening position as indicated by the one-dot chain line in Figure 17, the torsion spring 270 falls into its dead point condition. From this condition, if the cover is slightly moved in the direction of the arrow A, the cover 244 is automatically opened to the full open position as indicated by the two-dot chain line, while if the cover 244 is moved slightly in the direction of the arrow B, the cover is automatically closed to a closed position as indicated by the solid line. Accordingly, the cover 244 is always held at either the closed position indicated by the solid line or the full open position indicated by the two-dot chain line.

With this cover opening and closing mechanism, the tape cassette can be loaded and unloaded without holding the opening and closing cover with one hand during loading and unloading of the tape cassette 260, and accordingly, the apparatus 2 can be easily handled during loading and unloading of a tape cassette. In the first embodiment, the apparatus 1 should be held in its substantially horizontal posture during loading and unloading of the tape cassette since the opening and closing cover is operated under the gravitational force. However, in the apparatus 2 of the second embodiment, the cover can be held in its open position even though the apparatus is positioned in any posture, since the cover is not dependent upon the gravitational force, and accordingly, the apparatus 2 can be easily used. Further, a part of the spring wire of the torsion spring 270 which passes through the hooking hole 244d serves as a resilient stopper when the cover is opened.

As shown in Figures 18(a) and 18(b) and in Figure 10, a plurality of slit holes 236 are formed on the rear side of the body casing. These slit holes 236 allow a singer who grips the grip section 24 with one hand to hear his song which has its sound volume increased by the speaker, similar to the slit holes 136 in the first embodiment. Further, they give a heat radiation effect. The one difference from the first embodiment is that the slit holes 236 are formed so as to be directed downwards (toward the lower coupling part 20b), as shown in Figures 18(a) and 18(b). This arrangement prevents the sound from the speaker from propagating towards the microphone 248a so as to prevent occurrence of howling as far as possible.

Figure 19 is a circuit block diagram showing a typical basic circuit arrangement for the portable apparatus for reproducing and amplifying sound according to this embodiment of the present invention. With the apparatus in this embodiment, either a sound multiplex tape cassette or other normal tape cassette (i.e. a tape cassette recorded also with vocal sound) can be used. Of course,a tape cassette on which musical tunes alone are recorded for a "kara-oke" performance can also be used. An explanation will be made hereinbelow of the circuit arrangement of the apparatus when used with a sound multiplex tape cassette as one example.

Similar to a known "kara-oke" apparatus, the apparatus shown in Figure 19 is also composed of a sound reproducing system 50, a vocal sound input system 60 for inputting the sound of a singer, a mixing and amplifying system 70 and a speaker 80 as a transducer. The parts 50, 60, 70 are disposed in the vocal sound medium storage section 120 or 220, while the speaker 80 is disposed in the speaker storage section 130 or 230 which is spaced therefrom. The sound reproducing system 50 includes a vocal sound reproducing magnetic head 50a and a music tune reproducing magnetic head 50b which are attached to the tape deck. The magnetic heads 50a, 50b are arranged to produce signals derived respectively from a vocal track and from an orchestral or instrumental track on the tape used. A reproduced weak vocal sound signal from the magnetic head 50a is amplified by a pre-amplifier 50c, and is fed to the mixing and amplifying system 70 through resistors $R_1$, $R_2$. Further, a reproduced weak music tune or instrumental signal from the magnetic head 50b is amplified by a pre-amplifier 50d, and is fed to the mixing and amplifying system 70 through the resistors $R_3$, $R_4$. The vocal sound input system 60 for the inputting of the vocal sound from the singer includes the capacitor microphone 248a, a pre-amplifier 60a for amplifying a weak input vocal sound signal, a volume control 60b and a resistor $R_5$, and the amplified signal is fed to the mixing and amplifying system 70 through the volume control 60b and the resistor $R_5$. The mixing and amplifying system 70 includes a sound volume adjusting control 70a (linked to the volume adjusting dial 28a) and a power amplifier 70b as a driver for the small size speaker 80.

After the sound multiplex tape cassette has been loaded into the tape cassette storage chamber 246, when the play (reproducing) push button member 220d is pressed (refer to Figure 9(c)), the tape runs so as to effect the reproducing mode, the reproduced music tune signal derived from the tape are mixed together at a connecting point $P_0$ between the resistors $R_2$, $R_4$, and accordingly reproduced sound (vocal sound and music tune sound) from the sound multiplex tape issues from the speaker 80. When a singer sings a song at the microphone section 26, his vocal sound is inputted through the microphone 248a, and then the sound of the singing, which has been made louder, also issues from the speaker 80 simultaneously.

As shown in Figure 19, in this embodiment, a sound multiplex balance volume control 90a is disposed between the connecting point $P_1$ of the resistors $R_1$, $R_2$ and the connecting point $P_2$ of the resistors $R_3$, $R_4$, and a normally closed push switch 90c is disposed between the sliding element 90b of the balance volume control 90a and the ground. Let it be assumed that the resistance between opposite ends of the sound multiplex balance volume control 90a is R, that the resistance between the connecting point $P_1$ and the sliding element 90b is r, that there is a reproduced vocal sound signal $C_1$ which is the output of the resistor $R_1$ and which leaks to the ground and attenuates through the resistance value r, and that there is a reproduced music tune signal $C_2$ which is the output of the resistor $R_3$ and which leaks to the ground and attenuates through the resistance value R-r. Accordingly, the balance between the reproduced vocal sound signal and the reproduced music tune signal is adjusted in dependence upon the position of the sliding element 90b. If $r > R-r$, the music tune sound is greater than the vocal sound, or vice versa. Usually during a "kara-oke" performance, the vocal sound (i.e. the vocal sound from a professional singer derived from the tape) is restricted while the music tune or taped instrumental sound is increased. It is to be noted here that the push switch 90c is linked to the push button member 28b for the vocal sound assist switch shown in Figure 9(c). Accordingly, if this push button member 28b is pressed, the push switch 90c is opened. The opening of the push switch 90c breaks the connection between the sliding element 90b and the ground, and accordingly the attenuation of the reproduced vocal sound signal $C_1$ and the reproduced music tune signal $C_2$ is interrupted, so that not only the music tune sound but also the vocal sound are transmitted from the speaker 80.

For example, if the singer forgets the lyric lines of a song during his singing, and if he continuously presses the push button member 28b for the vocal sound assist switch for a long time, a vocal sound from a professional singer is transmitted from the speaker during this time, and accordingly, the singer can continue his singing while following this vocal sound.

Figure 20 is a perspective view showing how the push button member for the vocal sound assist switch or the rotary volume adjusting member is manually operated by the thumb while holding the grip section by one hand. The rotary volume adjusting member 28a is located nearer to the grip section 24 than the push button member 28b for the vocal sound assist switch. The manual force applied to the rotary volume adjusting member 28 is in the direction indicated by the one-dot chain line arrow A shown in Figure 20, and the manual force applied to the push button member 28b for the vocal sound assist switch is in the direction indicated by the two-dot chain line arrow B shown in Figure 20. When the rotary volume adjusting member 28a is turned, the flank of the thumb indicated by the one-dot chain line is brought into contact with the member 28a while moving the thumb in the direction of the one-dot chain line arrow A. In such a case,the tip of the thumb can hardly touch the push button member 28b, and accordingly, there is no possibility of unexpectedly pressing the push button member 28b. This is because the volume adjusting member 28a serves as a fulcrum, and the tip of the thumb is naturally spaced from the push button member 28b. When the push button member 28b is operated, the tip of the thumb presses it. In such a case, the flank of the thumb makes contact with the volume adjusting member 28a. The tip of the thumb moves in the direction of the arrow B. Even though the flank of the thumb follows this motion so as to press the member 28a, the latter is not turned substantially since only a pressing force in the direction of the arrow B passing through the rotational centre of the member 28a is effected.

Contrary to the positional relationship between the volume adjusting member 28a and the push button member 28b for the vocal sound assist switch, as shown in Figure 19, if the push button member 28b for the vocal sound assist switch is located nearer to the grip section 24 than the volume adjusting member 28, the above-mentioned operability and use facility cannot be obtained. In such a case, there is a risk of pressing the push button member 28b simultaneously with the turning of the volume adjusting member 28a, and further, the turning of the member 28a by the tip of the thumb is very difficult.

When the push button member 28b for the vocal sound assist switch 28b is pressed, since it can be hardly pressed by the flank of the thumb, it is pressed by the tip of the thumb. Accordingly, it is necessary to press the push button member 28b after the tip of the thumb has been once displaced to a position above the member 28a, and accordingly, the operability is inferior, causing a possible erroneous operation. However, with the relationship between the manually operated elements shown in Figure 20, no vertical shift of the tip of the thumb occurs, and accordingly, the operation can be made speedily and surely, resulting in a low possibility of erroneous operation. Consequently, the manual operation can be carried out even, for example, in darkness without visually confirming the positions of the push button member 28b and the volume adjusting member 28a and the apparatus it therefore very suitable for use in "kara-oke" performances.

Figure 21 is a circuit block diagram illustrating both the basic circuit block of the apparatus shown in Figure 19 and an electronic circuit system for an automatic tune "intro-scan" or scanning operation and starting device for locating a desired tune on a tape being used. Like reference numerals are used in Figure 21 to denote those like parts shown in Figure 19, and the description thereof is abbreviated.

The electronic circuit system for the automatic tune scanning operation and starting device, includes a scanning or head operation setting starting circuit 310, a inter tune gap detecting circuit 320 for detecting a gap between adjacent tunes on the tape, a detection completion sound generating circuit 330 and a motor stopping circuit 340.

The scanning operation starting circuit 310 is a series circuit of leaf switches 310a, 310b which will be explained later and which are connected between a state selecting terminal 320a of the inter tune gap detecting circuit 320 and the ground. The two leaf switches 310a, 310b are normally closed, and accordingly, the state selecting terminal 320a of the inter tune gap detecting circuit 320 is at the ground potential (low potential) so that the inter tune gap detecting circuit 320 is held in a stationary state (de-energized condition). The leaf switch 310a is opened by being pressed with a pressing projection T of the fast-feed push button member 220b, and further, the leaf switch 310b is opened by being pressed with a pressing projection S of the rewinding push button member 220c. When either one of the leaf switches 310a, 310b is opened, the state selecting terminal 320a of the inter tune gap detecting circuit 320 is at a potential higher than the ground potential, and accordingly, the inter tune gap detecting circuit 320 is turned into an energized condition (active condition).

The inter tune gap circuit 320 has a so-called active-high circuit arrangement in which a reproduced and amplified vocal sound signal from the pre-amplifier 50c is inputted through a resistor $R_6$ and a capacitor C, and a reproduced and amplified music tune signal from the preamplifier 50d is inputted through a resistor $R_7$ and the capacitor C. That is, it receives both signals after they have been mixed, and detects a non-signal condition or a low level condition between the adjacent tunes, and delivers an inter tune gap detection signal when it is detected. The motor stopping circuit 340 stops the rotation of an electronic governor motor M for driving a reel in the tape cassette 260 using the inter tune gap detection signal from the inter tune gap detecting circuit 320 as a trigger signal. The detection completion sound generating circuit 330 delivers an information signal or an artificial vocal sound signal to the power amplifying device 70a through a resistor $R_8$, using the abovementioned inter tune gap detection signal as a trigger signal.

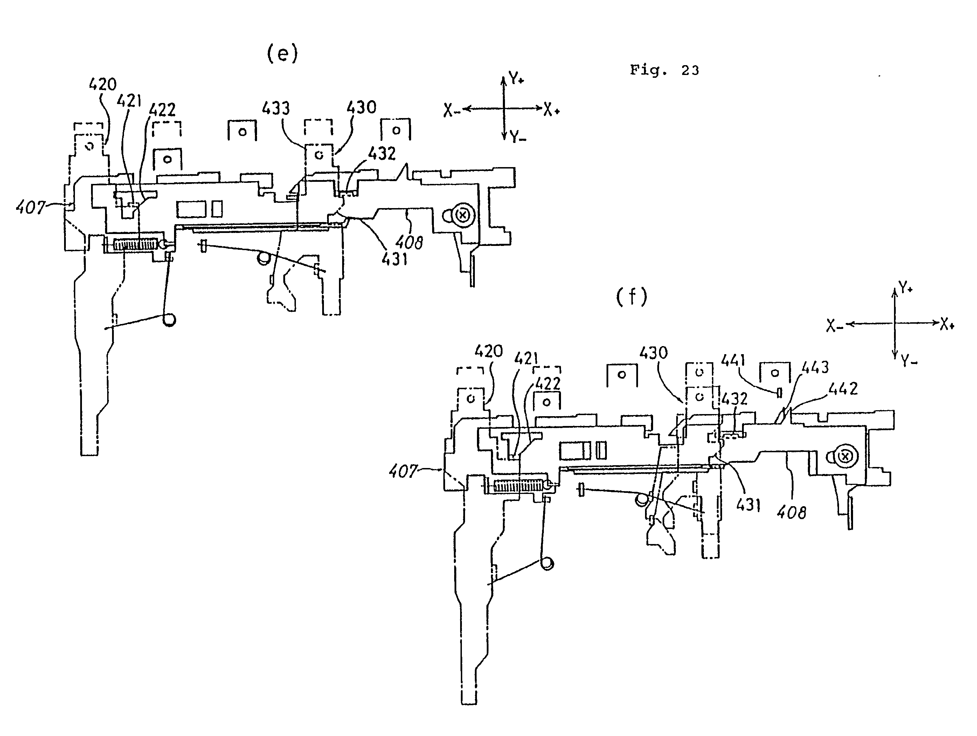

An explanation will now be provided of a mechanism relating to the circuit system of the automatic scanning operation starting device. Figure 22 is an exploded perspective view illustrating a tape deck 400 in the device, and Figures 23(a) to 23(f) are schematic plan views explaining the lock and unlock operations of the mechanism used in association with the manual operation of push buttons on the tape deck. The tape deck 400 comprises a number of components which are assembled on the front and rear surfaces of a plastics base board 401, as shown in Figure 22. Reel shafts 402, which project from the rear surface of the plastics base board 401, are fitted in reel holes in a tape cassette (not shown) when the latter is loaded. Further, a play lever 404, on which is mounted a head assembly 403 including the reproducing magnetic head 50a and the music tune reproducing magnetic head 50b (see Figure 19), is slidably mounted on the plastics base board 401 for movement in directions $Y_+$, $Y_-$. The play lever 404 has an engagement member on which the play (reproducing) push button member 220d is mounted. Further, a coil spring 406 acts between the play lever 404 and the plastics base board 401. The resiliency of the coil spring 406 exerts a return force on the play lever 404 in the direction of the arrow $Y_+$.

As shown in Figure 23(a), a lower slide plate 407 and an upper slide plate 408 are attached to the rear surface of the plastics base board 401. The lower slide plate 407 is slidable in the directions of the arrows $X_+$, $X_-$, and the resiliency of a torsion spring 407a exerts a return force on the lower side plate 407 in the direction of the arrow $X_-$. The upper slide plate 408 is slidable on the lower slide plate 407 in the directions of the arrows $X_+$, $X_-$, and the resiliency of a coil spring 408a exerts a return force on the upper slide plate 408 in the direction of the arrow $X_-$.

An explanation is provided of the automatic "introscan" or scanning operation with reference to Figures 21 to 23. At first, as shown in Figure 23(b), when the play lever 404 (indicated by the one-dot chain line in Figure 23(b)) is pressed in the direction of the arrow $Y_+$, a projection 409 thereon pushes a slide plate 410 (indicated by the two-dot chain line in Figure 23(b)) in the direction of the arrow $Y_+$. Accordingly, a projection 411 on the slide plate 410 closes a leaf switch 412, which acts as a power switch, so as to supply a power source voltage to the motor and the circuit system. Simultaneously, another projection 413 on the play lever 404 presses an inclined surface of a pawl part 414 of the slide plate 407 so as to move the lower slide plate 407 in the direction of the arrow $X_+$, so overcoming the spring force of the torsion spring 407a, the movement of the lower slide plate 407 being accompanied by that of the upper slide plate 408. Consequently, the projection 413 is engaged by the pawl part 414 so as to lock the play lever 404. In this play (reproducing) mode, as shown in Figure 23(c), when a rewinding lever 415 is pushed in the direction of the arrow $Y_+$, so overcoming the spring force of the torsion spring 416, the inclined surface of the pawl part 417 presses a projection 418 on the upper slide plate 408 so that the upper slide plate 408 moves in the direction of the arrow $Y_+$, relative to the lower slide plate 407. This overcomes the spring force of the coil spring 408a, and accordingly, the pawl part 417 is engaged with the projection 418 so as to lock the rewinding lever 415. The rewinding lever 415 has an engagement piece 405 on which the rewinding push button member 220c is mounted. Meanwhile, during the process of the sliding of the rewinding lever 415 in the direction of the arrow $Y_+$, the pressing projection S on the rewinding push button member 220c shown in Figure 22 presses one of the contact pieces of the leaf switch 310b which is therefore opened.

When the leaf switch 310b is opened, as shown in Figure 21, the inter tune gap detecting circuit 320 is energized (placed in an active condition). During reproducing and rewinding modes, since the reproduced vocal sound signal and the reproduced music tune signal are inputted to the inter tune gap detecting circuit 320, the inter tune gap detecting circuit 320 detects a non-signal condition or a low level condition between the adjacent tunes, and delivers an inter tune gap detection signal. When the inter tune gap detection signal is delivered, the motor stopping circuit 340 stops the rotation of the electronic governor motor M for driving a reel, using the inter tune gap detection signal as a trigger signal. Simultaneously, the detection completion sound generating circuit 330 delivers an information signal or an artificial voice signal to the power amplifying device 70a through the resistor $R_8$, using the inter tune gap detection signal as a trigger signal. Accordingly, an information signal or an artificial voice signal is issued from the speaker 80.

Heretofore, in general, when an inter tune gap detection signal is delivered, a known tape recorder converts this signal into a mechanical drive force by means of a solenoid plunger or the like so as to actuate a release lever or the like in order to release the play lever 404 or the rewinding lever 415, thereby stopping the motor M. Upon the start of this solenoid plunger, several Amperes of current are consumed immediately. Further, although, in some known tape recorders, the rewinding mode is electrically locked, the consumption of power is still large. However, in the automatic scanning operation circuit in the apparatus described above, in which the motor stopping circuit 340 stops the motor M internally electrically with the timing of the generation of the inter tune gap detection signal, savings can be made in the large current necessary for driving the mechanism of the tape deck for the releasing operation. In the portable "kara-oke" apparatus described above, battery power should be consumed carefully bit by bit for driving the speaker and during the rewinding mode, and a long life of the battery is indispensable. Under such conditions, the completion of the scanning operation can be effected without releasing the mechanism, and the cumbersome job of replacing batteries can be avoided. Therefore it is possible to enjoy the use of the "kara-oke" apparatus for a long time.

Next, when the information sound or the artificial voice sound indicating the completion of the scanning operation is issued, if the singer pushes a start lever 420 shown in Figure 23(c) in the direction of the arrow $Y_-$, so overcoming the spring force of the torsion spring 407a, a projection 420 thereon is pressed against an inclined part of an opening 422 in the upper slide plate 408 so as to move the upper slide plate 408 in the direction of the arrow $X_+$, and accordingly, the engagement between the pawl part 417 and the projection 418 is released. Therefore, as shown in Figure 23(d), the rewinding lever 415 is returned in the direction of the arrow $Y_+$ so that the locked condition thereof is released. When the rewinding lever 415 is returned in the direction of the arrow $Y_+$, the pressing projection S moves away from one of contact pieces of the leaf switch 310b, and accordingly, the leaf switch 310b is returned to its normally closed condition. Accordingly, since the state selection terminal 320a of the inter tune gap detecting circuit 320 is at the ground potential, the inter tune gap detecting circuit 320 is shifted into the inactive condition. In association with the shift into the inactive condition, the stopping action of the motor stopping circuit 340 is released, and accordingly, the motor M is rotated so as to go back to the play (reproducing) mode. That is, after completion of the scanning operation, the mode is shifted into the play (reproducing) mode only by one manual operation for pushing the start lever 420. It is not necessary to effect the push-in operation of the play lever 404 just after the push-in operation of a release lever 425 Accordingly, the operability of the start after completion of the scanning operation is satisfactory. The issuance of the information sound or the artificial voice sound caused by the push-in operation of the rewinding lever 415 indicates the fact that it is a music tune on reproduction or gives the title of the previous music tune. Next, when the pressing of the start lever 420 is removed, the start lever 420 is automatically returned to the condition shown in Figure 23(b) by the spring force of the torsion spring 407a. Accordingly, the play (reproducing) mode is retrieved.

It is to be noted that the start lever 420 has an engagement member 428 onto which the start push button member 220e is fitted. When a fast-feed lever 430 is pushed in the direction of the arrow $Y_-$, so overcoming the spring force of the torsion spring 416 from the reproducing condition shown in Figure 23(b), an inclined part of a pawl part 431 presses a projection 432 on the upper slide plate 408, and accordingly, the upper slide plate 408 is moved in the direction of the arrow $Y_+$, so overcoming the spring force of the coil spring 406, relative to the lower spring 407. Therefore, the pawl part 431 engages with the projection 432 so that the fast-feed lever 430 is locked. It is to be noted that the fast-feed lever 430 has an engagement member 433 onto which the fast-feed push button top 220b is fitted. Meanwhile, during the process of sliding of the fast-feed lever 430 in the direction of the arrow $Y_+$, the pressing projection T on the fast-feed button member 220b shown in Figure 22 presses one of contact pieces of the leaf switch 310a which is therefore opened. When the leaf switch 310a is opened in a similar way to the opening of the above-mentioned leaf switch 310b, the inter tune gap detecting circuit 320 is shifted to an energized condition (active condition) so as to carry out the automatic scanning operation. After the information sound or the artificial voice sound has been issued from the speaker 80, when the start lever 420 is pushed in the direction of the arrow $Y_-$, so overcoming the spring force of the torsion spring 407a, the projection 421 thereon presses the inclined part of the opening 422 in the upper slide plate 408 so as to move the upper slide plate 408 in the direction of the arrow $X_+$. Accordingly, the engagement between the pawl part 431 and the projection 432 is released. Therefore, the fast-feed lever 430 is returned in the direction of the arrow $Y_+$, as shown in Figure 23(f), and accordingly, the locked condition thereof is released. When the fast feed lever 430 is returned in the direction of the arrow $Y_+$, the pressing projection T moves away from the one of contact pieces of the leaf switch 310a which is therefore closed. Thereby, the state selection terminal 320a of the inter tune gap detecting circuit 320 is at the ground level so that the inter tune gap detecting circuit 320 is shifted into the inactive condition. It is to be noted that the issuance of the information sound or the artificial voice sound caused by the pushin operation of the fast-feed lever 430 indicates that it is the heading of the next music tune, jumping over a music tune on reproduction. Next, when the pressure against the start lever 420 is released, the start lever 420 is automatically returned to the condition shown in Figure 23(b) by the spring force of the torsion spring 407a. That is, the play (reproducing) mode is retrieved. It is to be noted that the start lever 420 has an engagement member 428 onto which the start push button member 220e is fitted.

The release lever 425, which has an engagement member 440 onto which the release push button member 220a is fitted, is urged in the direction of the arrow $Y_+$ by the spring force of a torsion spring which is not shown. Further, the release lever 425 has a projection 441. The upper slide plate 408 and lower slide plate 407 have pawl parts 442, 443 against which the projection 441 abuts (see Figures 23(d) and 23(f)). When the release lever 425 is pushed in the direction of the arrow $Y_-$ during the reproducing mode, the projection 441 presses both pawl parts 442, 443 against which it abuts so as to move both the upper slide plate 408 and the lower slide plate 407 in the direction of the arrow $X_+$. Accordingly, the engagement between the projection 413 and the pawl part 414 is released so as to release the lock condition of the play lever 404. Although the description has been abbreviated, the projection 441 on the release lever 425 abuts against the pawl parts 442, 443, individually, so as to release the fast-feed condition and the rewinding condition, respectively, during the non-reproducing mode.

It is to be noted that if the reproduced sound volume is restricted during play mode without loading a tape cassette in the apparatus, it can be also used as a loudspeaker.

As mentioned above, in the portable apparatus for reproducing and amplifying sound described above, which incorporates a sound multiplex reproducing device, since there are provided a signal intensity changing means for changing the strength of a reproduced vocal sound signal fed at least to a mixing and amplifying means in response to an external manual operation, and a signal intensity setting means for disabling the signal intensity changing means at the time of the external manual operation and for forcibly setting the strength of the reproduced vocal sound signal fed to the mixing and amplifying means to a predetermined value, a vocal sound by a professional singer or the like can be issued by operating the signal intensity setting means after previously adjusting the signal intensity changing means, when a part of the lyric lines of a song cannot be sung during a "karaoke" performance. Accordingly, the singer can continue signing the lyric lines of the song while hearing the vocal sound.

Further, in the portable apparatus for reproducing and amplifying sound described above, since there are provided a start signal generating means for producing a heading setting operation start signal at the time of fast forward feed operation or fast rearward feed operation during the reproducing mode, and there is a motor stopping circuit for stopping the supply of power to a drive motor for a vocal sound reproducing device in association with a detection signal from the inter tune gap detecting circuit, the motor can be directly and electrically stopped without forcibly releasing the locked condition of the mechanism system for fast forward feed or fast rearward feed upon completion of the music tune scanning operation. Accordingly, substantially no current is consumed upon the stopping of the motor after completion of the tune scanning operation. Consequently it is possible to save the power of an incorporated power source of the like.

Further, in the case of the addition of a detection completion sound generating circuit for issuing an information sound or an artificial voice sound from a speaker in response to the generation of the detection signal, a singer can readily know the time of completion of a tune scanning operation, and accordingly, the singer can readily carry out the next operation. Thus, it is possible to provide an apparatus which is highly satisfactory in use.

Further, with the arrangement having the start lever which releases the locked conditions of the fast forward feed selection lever so as to retrieve the reproducing mode alone, the restart (the reproduction from the heading of a tune) can be made merely by one operation of pushing the start lever, and accordingly, the apparatus is easily operable.

## Claims

1. Apparatus for reproducing and amplifying sound comprising a vocal sound input device (60) for inputting the sound of the voice of the user of the apparatus ; recorded instrumental sound reproducing means (50b, 50d, $R_3$, $R_4$) ; and mixing and amplifying means (70) for mixing and amplifying signals from the vocal sound input device (60) and from the recorded instrumental sound reproducing means (50b, 50d, $R_3$, $R_4$) characterised in that the mixing and amplifying means (70) is also arranged to receive signals from a recorded vocal sound reproducing means (50a,50c,$R_1$,$R_2$), adjustment means (90a,90b,90c) being provided for adjusting the relative intensity of signals which are transmitted to the mixing and amplifying means (70) from the vocal sound input device (60) and from the recorded vocal sound reproducing means (50a,50c,$R_1$, $R_2$).

2. Apparatus as claimed in claim 1 characterised in that the apparatus is a portable apparatus comprising casing means (12) provided with a speaker (80) and with the recorded instrumental sound reproducing means (50b,50d,$R_3$,$R_4$), the recorded vocal sound reproducing means (50a,50c,$R_1$,$R_2$), the mixing and amplifying means (70) and the adjustment means (90a,90b,90c) ; the casing means (12) being provided with the vocal sound input device (60) at a position substantially spaced from said speaker (80).

3. Apparatus as claimed in claim 2 characterised in that the casing means (12) has a manually grippable portion (14) by means of which the apparatus is handled, the casing means (12) being of elongated shape and the manually grippable portion (14) extending longitudinally thereof, the vocal sound input device (60) and the speaker (80) being disposed adjacent opposite ends of the casing means (12).

4. Apparatus as claimed in any preceding claim characterised in that the adjustment means (90a,90b,90c) comprises a switch (90c) which is operable to prevent the input to the mixing and amplifying means (70) of signals from the recorded vocal sound reproducing means (50a,50c,$R_1$,$R_2$).

5. Apparatus as claimed in any preceding claim characterised in that the adjustment means (90a,90b,90c) comprises a variable resistor (90a,90b) for varying the relative intensity of signals inputted into the mixing and amplifying means (70) from the recorded vocal sound reproducing means (50a, 50c, $R_1$,$R_2$) and from the recorded instrumental sound reproducing means (50b,50d,$R_3$, $R_4$).

6. Apparatus as claimed in any preceding claim characterised in that the apparatus is adapted for use with a recording containing a plurality of musical items with gaps therebetween ; the apparatus comprising a drive motor (M) for driving the said recording ; a starting signal generating means (310) for producing a starting signal to start a scanning of the recording ; and a detecting circuit (320), operative upon receiving a said starting signal, to detect in the course of said scanning a non-signal or a low level condition of the output from the recorded instrumental and vocal sound reproducing means and thus to produce a detection signal indicating a gap in the recording, there being motor stopping means (340) for stopping the supply of power to the drive motor (M) in response to a said detection signal.

7. Apparatus as claimed in claim 6 characterised by a drive control means (220b, 220c, 310a, 310b) which, when in an operative state, ensures that the motor (M), when the latter is also operative, drives the recording at a fast forward or a fast rearward speed, the motor stopping means (340) stopping the drive motor (M) in response to a said detection signal at a time when the drive control means (220b,220c,310a,310b) is held in its operative state.

8. Apparatus as claimed in claim 6 or 7 characterised by a detection completion sound generating circuit (330) for producing an audible indication that a said detection signal has been produced.

9. Apparatus for reproducing and amplifying sound comprising recorded sound reproducing means (50) for reproducing sound from a recording containing a plurality of items with gaps therebetween ; a drive motor (M) for driving a said recording through the recorded sound reproducing means (50) ; a starting signal generating means (310) for producing a starting signal to start a scanning of the recording ; and a detecting circuit (320), operative upon receiving a said starting signal, to detect in the course of said scanning a non-signal or a low level condition of the output from the recorded sound reproducing means (50) and thus to produce a detection signal indicating a gap in the recording characterised by motor stopping means (340) for stopping the supply of power to the drive motor (M) in response to a said detection signal.

10. Apparatus as claimed in claim 9 characterised by drive control means (220b, 220c, 310a, 310b) which, when in an operative state ensures that the motor (M), when the latter is also operative, drives the recording at a fast forward or a fast rearward speed, the motor stopping means (340) stopping the drive motor (M) in response to a said detection signal at a time when the drive control means (220b,220c,310a,310b) is held in its operative state.

11. A portable type audio reproducing and loudening apparatus comprising :

a casing body ;

a speaker disposed in said casing body at one position ;

a vocal sound reproducing device disposed in a casing integrally incorporated with said casing body ;

a grip section integrally coupled to said casing body or said casing, said apparatus being held by gripping said grip section with one hand ;

a vocal sound input section integrally coupled to said grip section, said casing body or said casing, at a position apart from said speaker, which is characterized in that :

said vocal sound reproducing device being a sound multiplex reproducing device including a vocal sound reproducing circuit and a music tune reproducing circuit ;

a mixing and amplifying means for mixing and amplifying a reproduced vocal sound signal from said vocal sound reproducing circuit, and a reproduced music tune signal from said music tune reproducing circuit so as to feed thus obtained signal to said speaker ;

a signal intensity changing means for changing at least the reproduced vocal sound signal intensity fed to said mixing and amplifying means in response to an external manipulation ; and

a signal intensity setting means for disabling said signal intensity changing means at the timing of an external manipulation and for setting the intensity of the reproduced vocal sound signal fed to said mixing and amplifying means, to a predetermined value.

**12.** A portable type audio reproducing and loudening apparatus comprising :

a casing body ;

a speaker disposed in said casing body at one position ;

a vocal sound reproducing device disposed in said casing body at another position or disposed in a casing integrally incorporated with said casing body ;

a grip section integrally coupled to said casing body or said casing, said apparatus being held by gripping said grip section with one hand ;

a vocal sound input section integrally coupled to said grip section, said casing body or said casing, at a position apart from said speaker, which is characterized in that ;

a starting signal generating means for producing a music tune intro-scan operation starting signal at the timing of a manipulation for fast forward feed or a manipulation for fast rearward feed during reproducing mode ;

an inter tune gap detecting circuit for detecting a non-signal condition or a low level condition of said reproduced signal from said vocal sound reproducing means upon receiving of said operation starting signal ; and

a motor stopping circuit for stopping supply of power to a drive motor for said vocal sound reproducing means in accordance with a detection signal from said inter tune gap detecting circuit.

Fig. 1

(a)

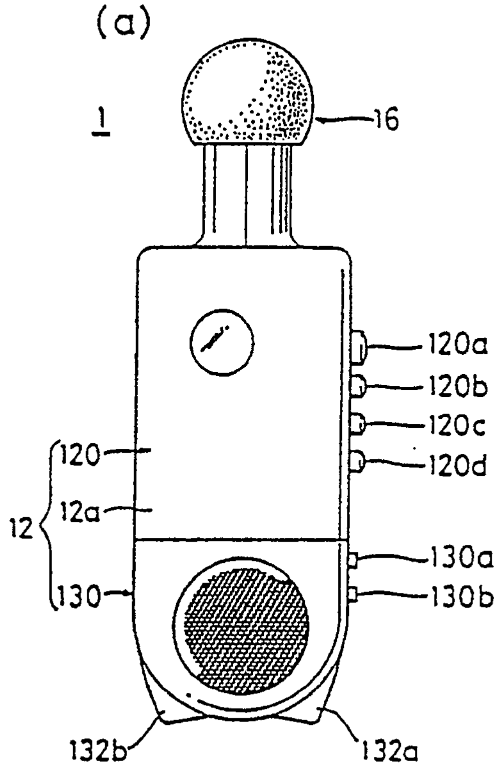
1
16
120a
120b
120c
120d
120
12a
12
130
130a
130b
132b
132a

(b)

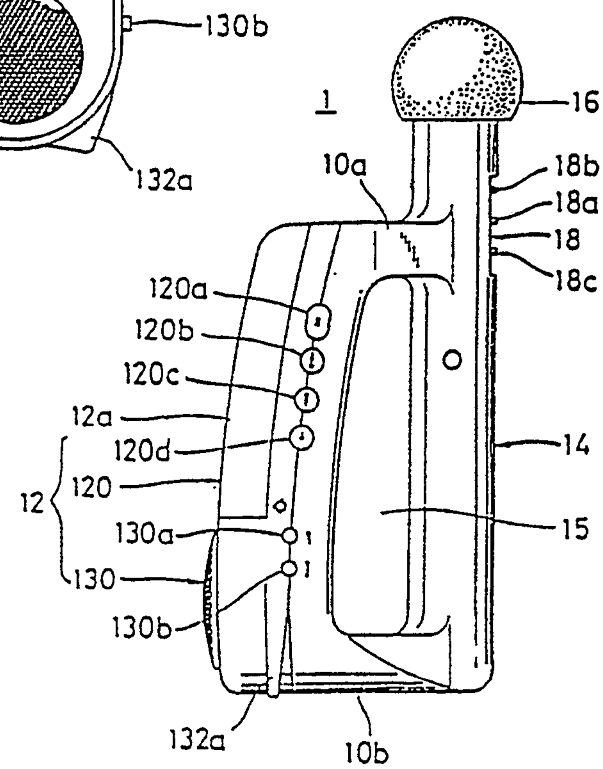
1
16
10a
18b
18a
18
18c
120a
120b
120c
12a
120d
120
12
130a
130
130b
14
15
132a
10b

Fig. 1

(c)

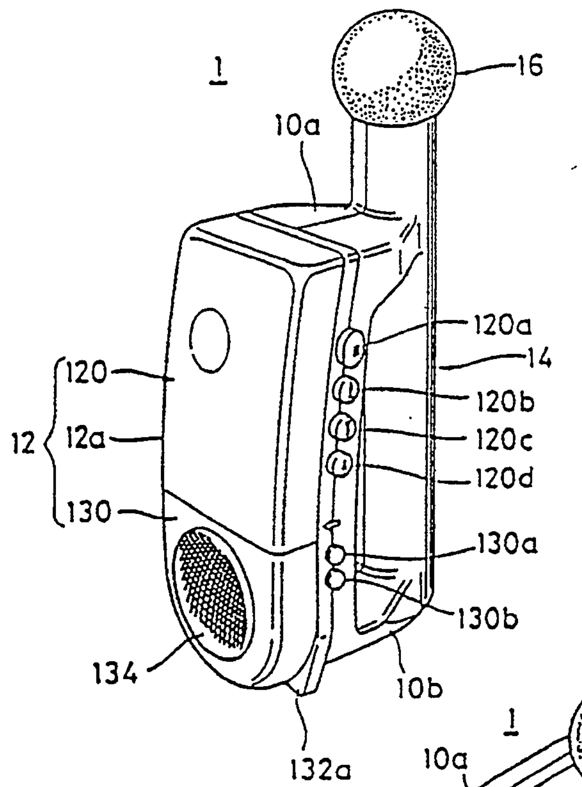
1
16
10a
120a
14
120
120b
12
12a
120c
120d
130
130a
130b
134
10b
132a

(d)

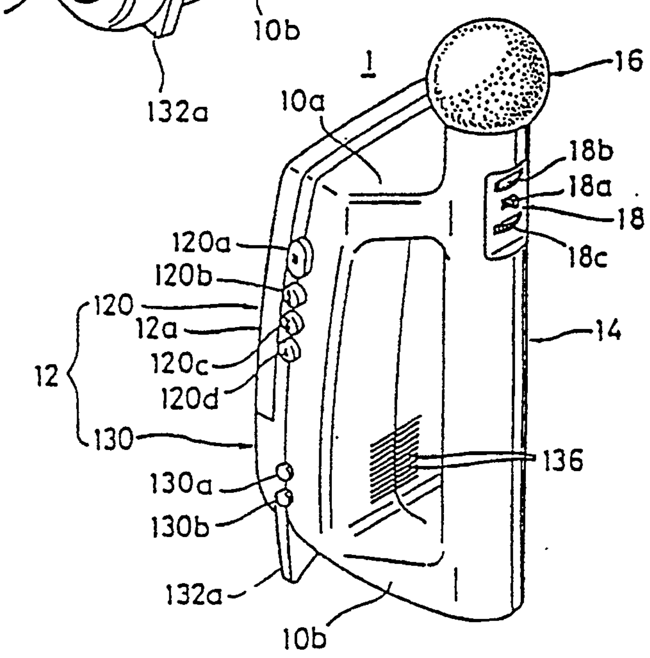
1
16
10a
18b
18a
18
120a
18c
120b
120
14
12a
12
120c
120d
130
136
130a
130b
132a
10b

Fig. 2

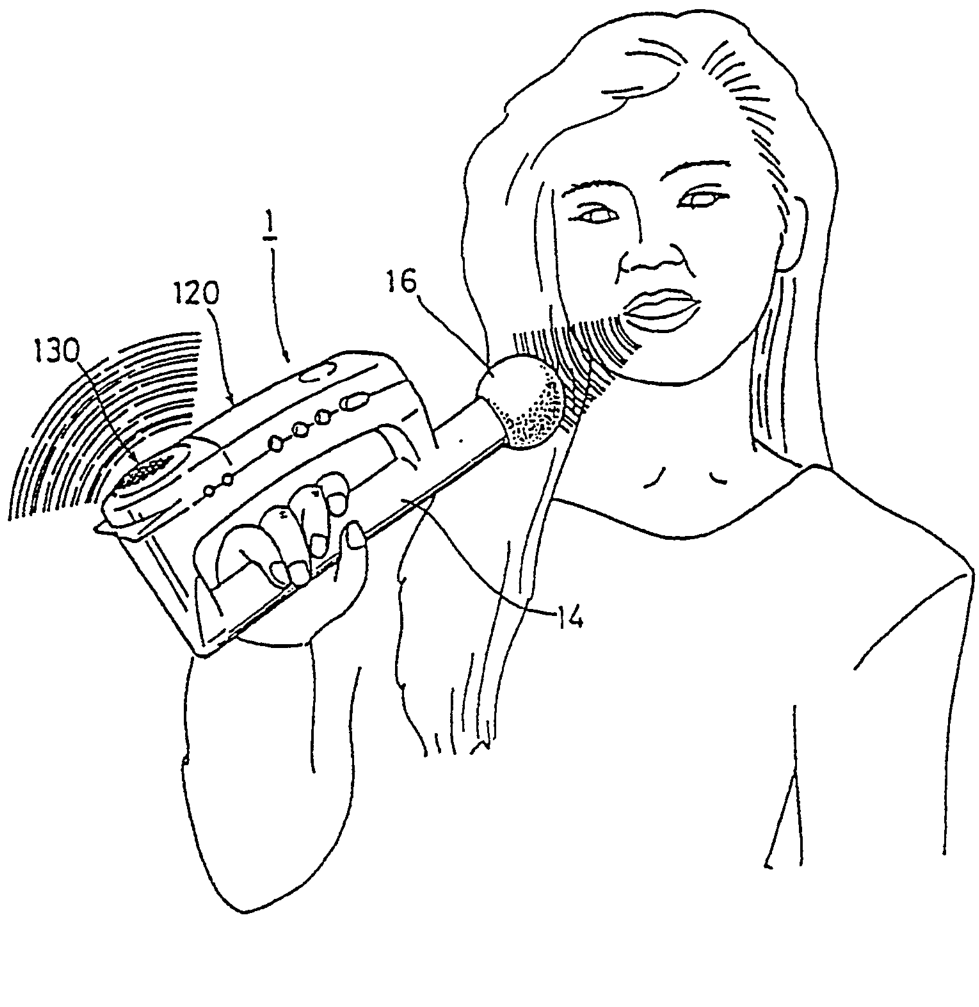

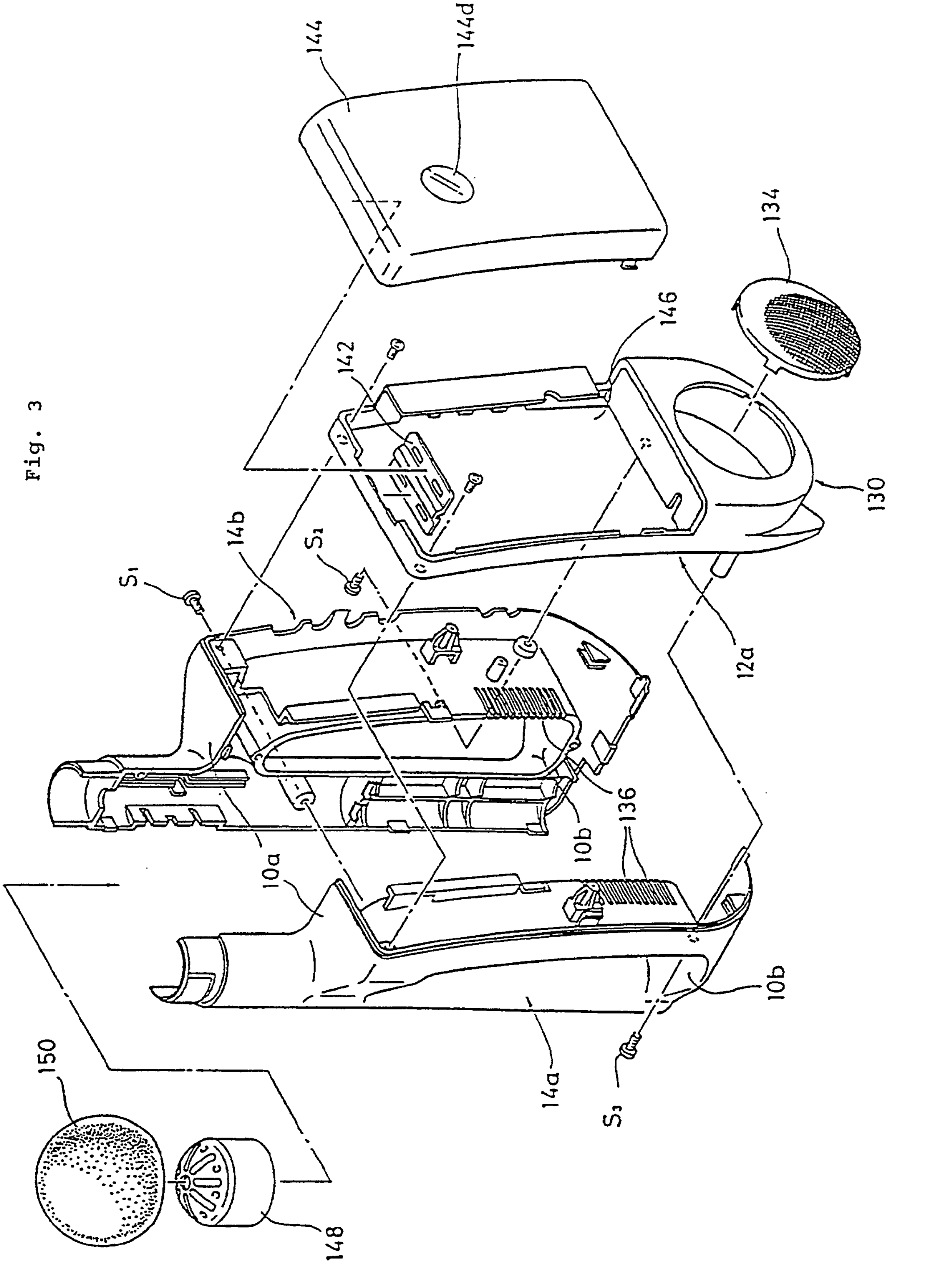
144
144d
134
146
142
130
14b
S1
S1
S1
12a
136
10b
10a
136
10b
14a
S3
150
148
Fig. 3

Fig. 4

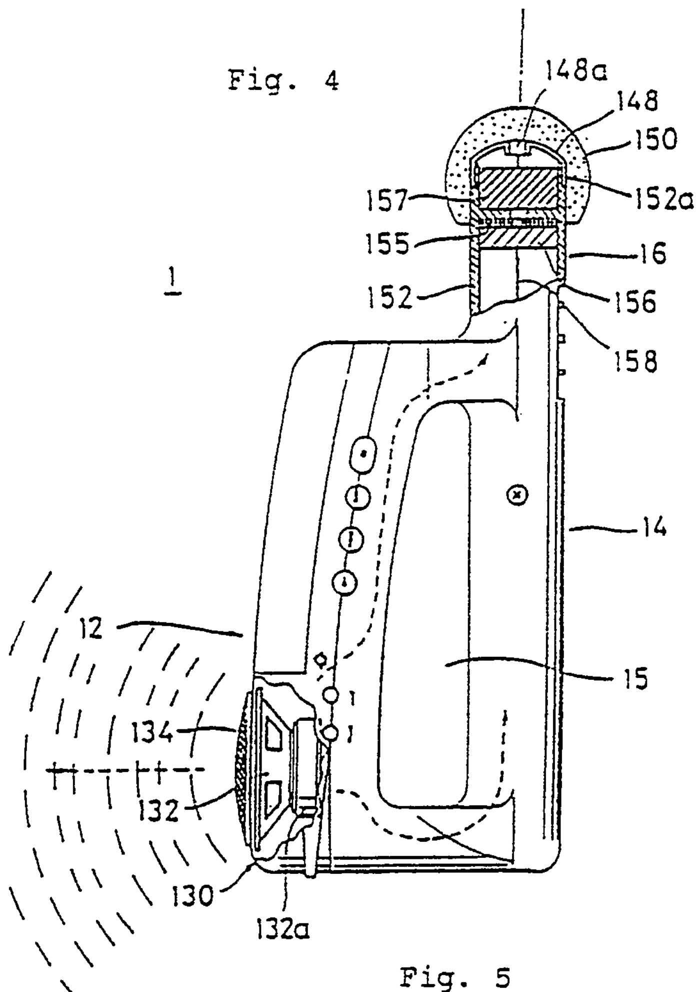
148a
148
150
152a
157
155
16
152
156
158
1
14
12
15
134
132
130
132a

Fig. 5

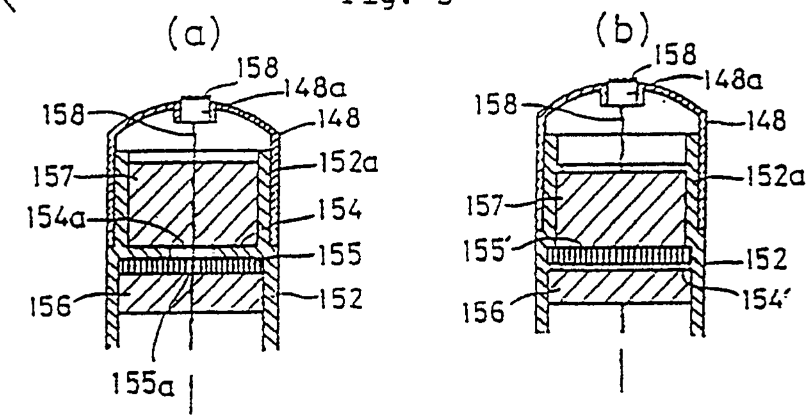
(a)
158
148a
158
148
157
152a
154a
154
155
156
152
155a
(b)
158
148a
158
148
152a
157
155'
152
156
154'

Fig. 6

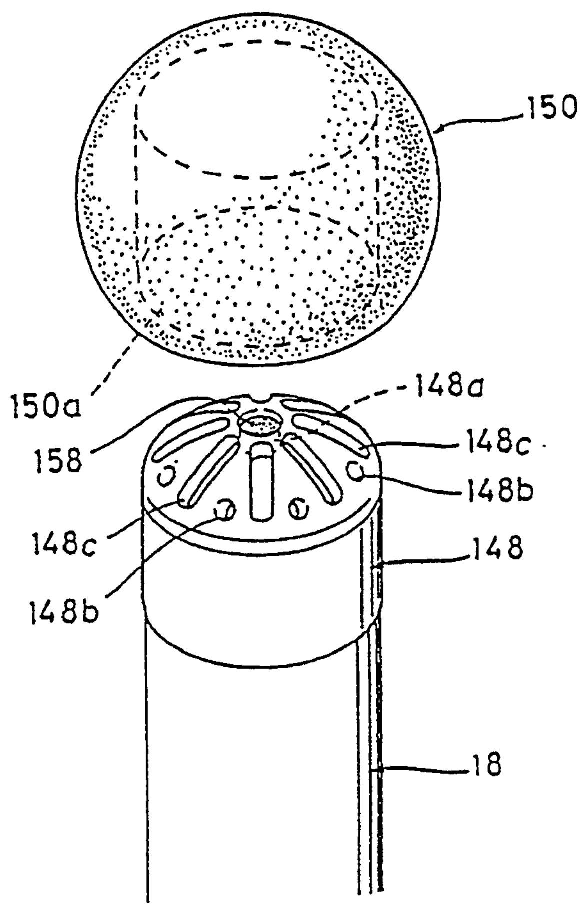

Fig. 7

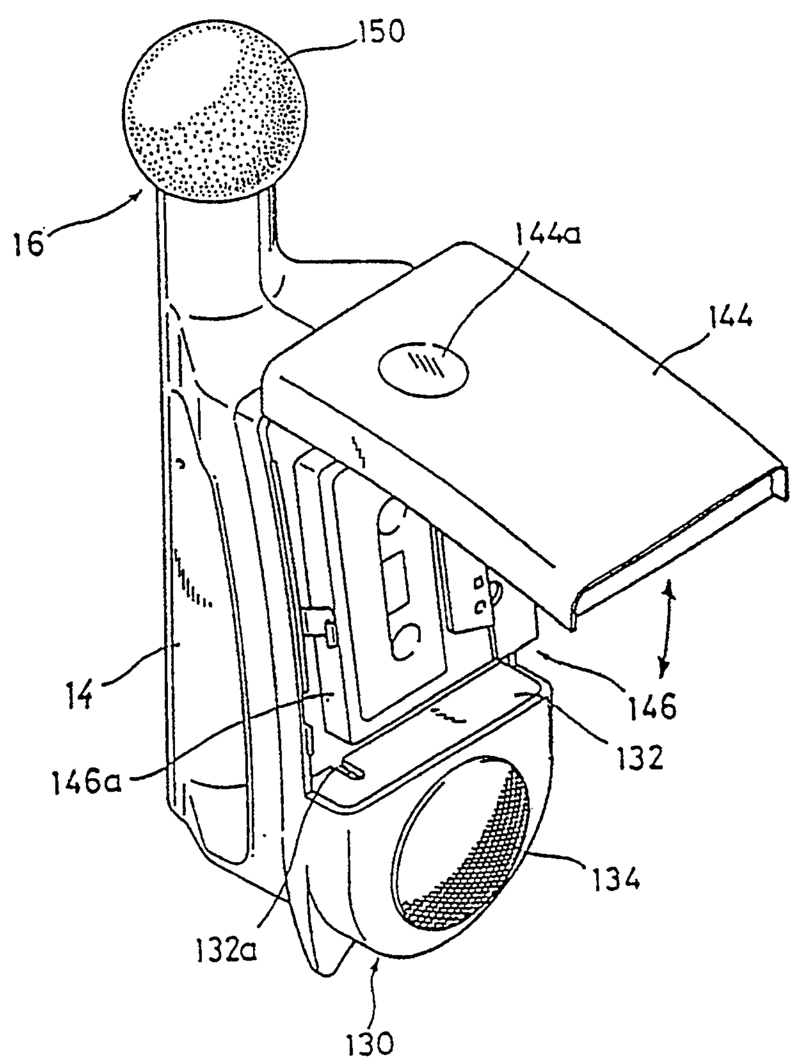

Fig. 8

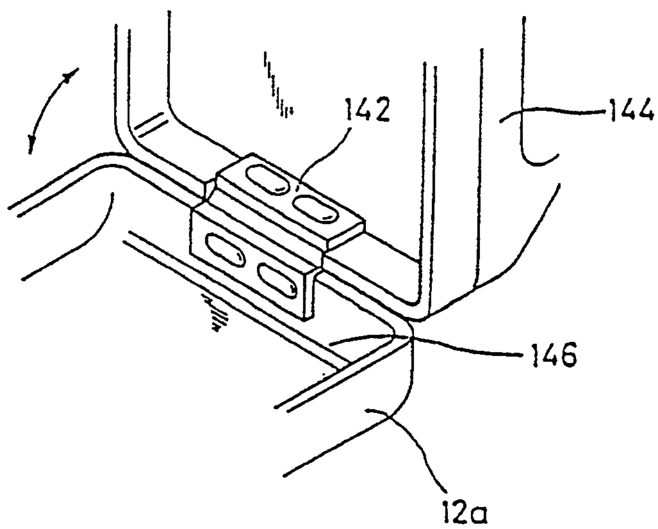

Fig. 9

(a)

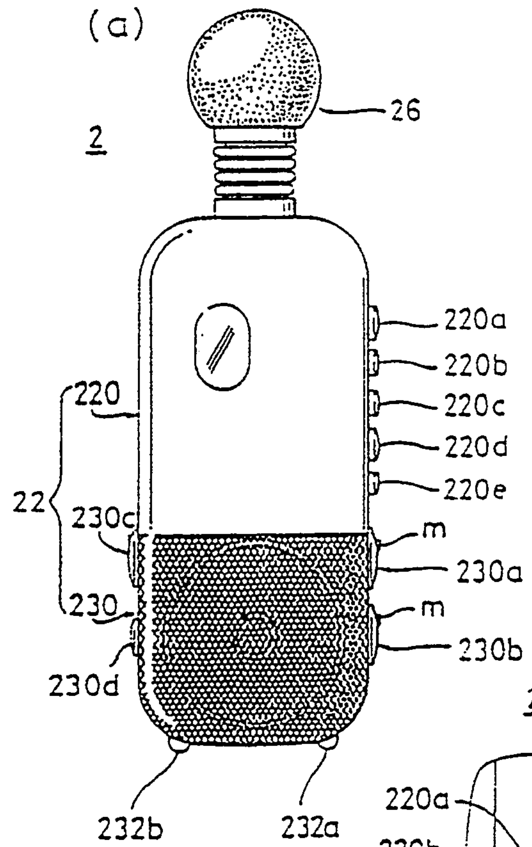
2
26
220a
220b
220c
220d
220e
220
22
230c
m
230a
230
m
230b
230d
232b
232a

(b)

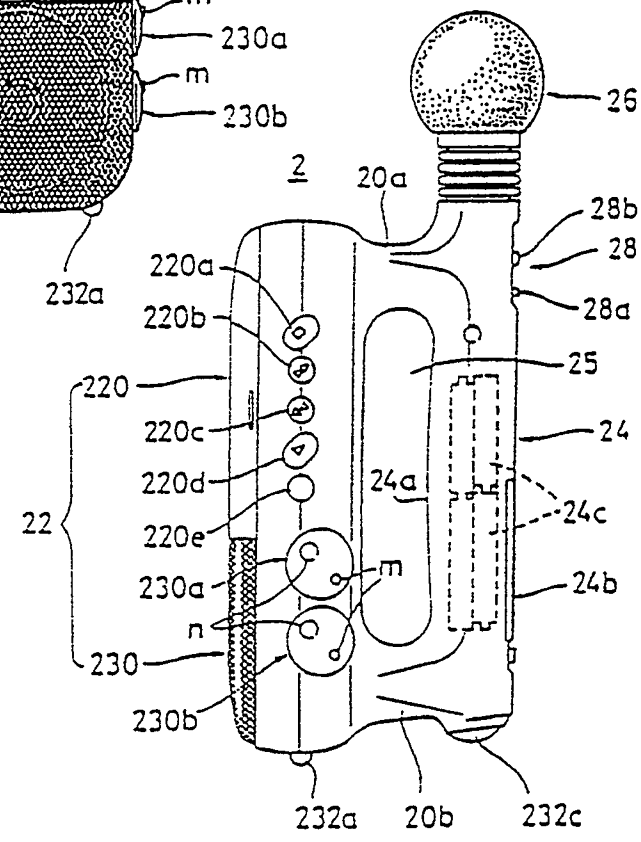
26
2
20a
28b
28
220a
28a
220b
25
220
24
220c
24a
220d
24c
22
220e
230a
m
24b
n
230
230b
232a
20b
232c

Fig. 9

(c)

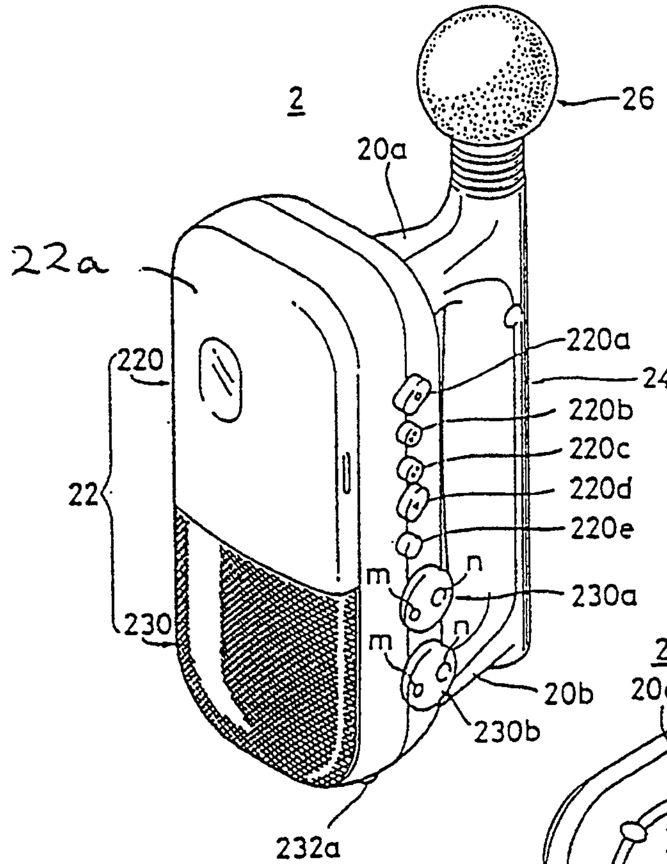
2
20a
26
22a
220
220a
24
220b
220c
220d
220e
22
m
n
230a
230
m
n
20b
230b
232a

(d)

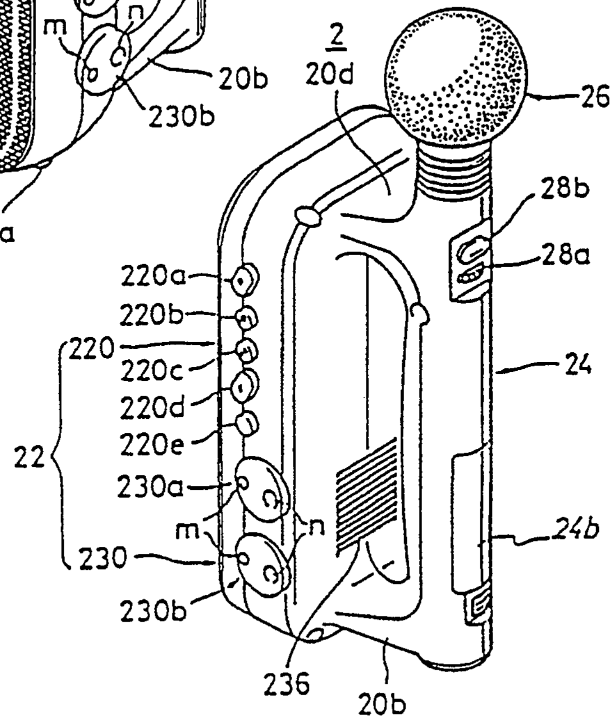
2
20d
26
28b
28a
220a
220b
220
220c
220d
220e
24
22
230a
m
n
24b
230
230b
236
20b

Fig. 9

(e)

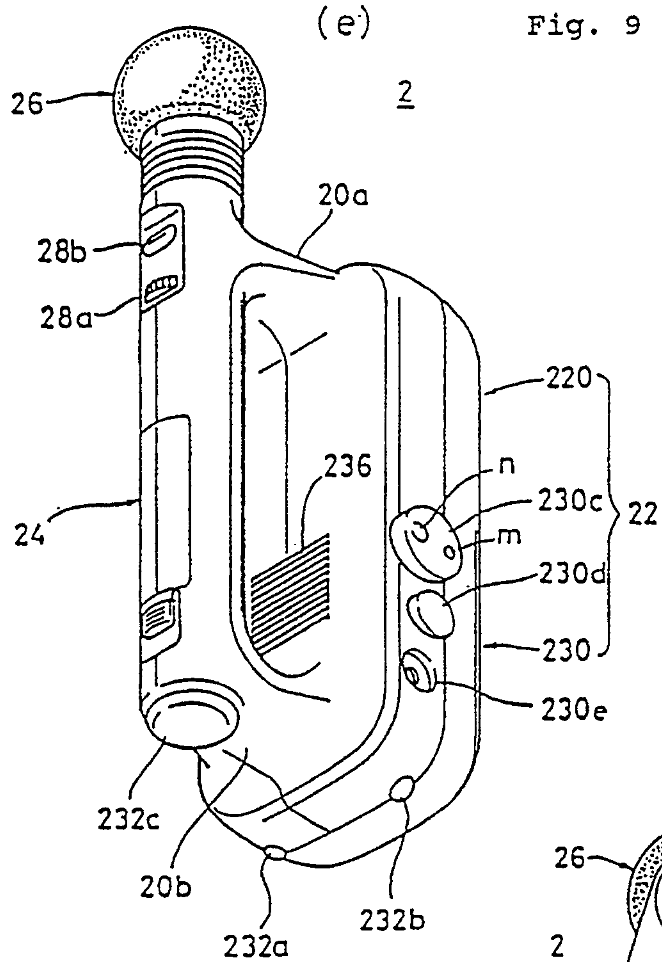
2
26
20a
28b
28a
220
236
n
230c
22
24
m
230d
230
230e
232c
20b
232a
232b

(f)

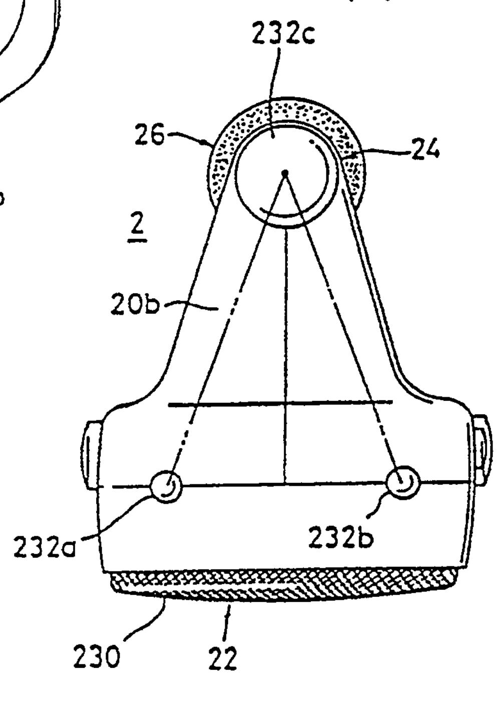
232c
26
24
2
20b
232a
232b
230
22

Fig. 10

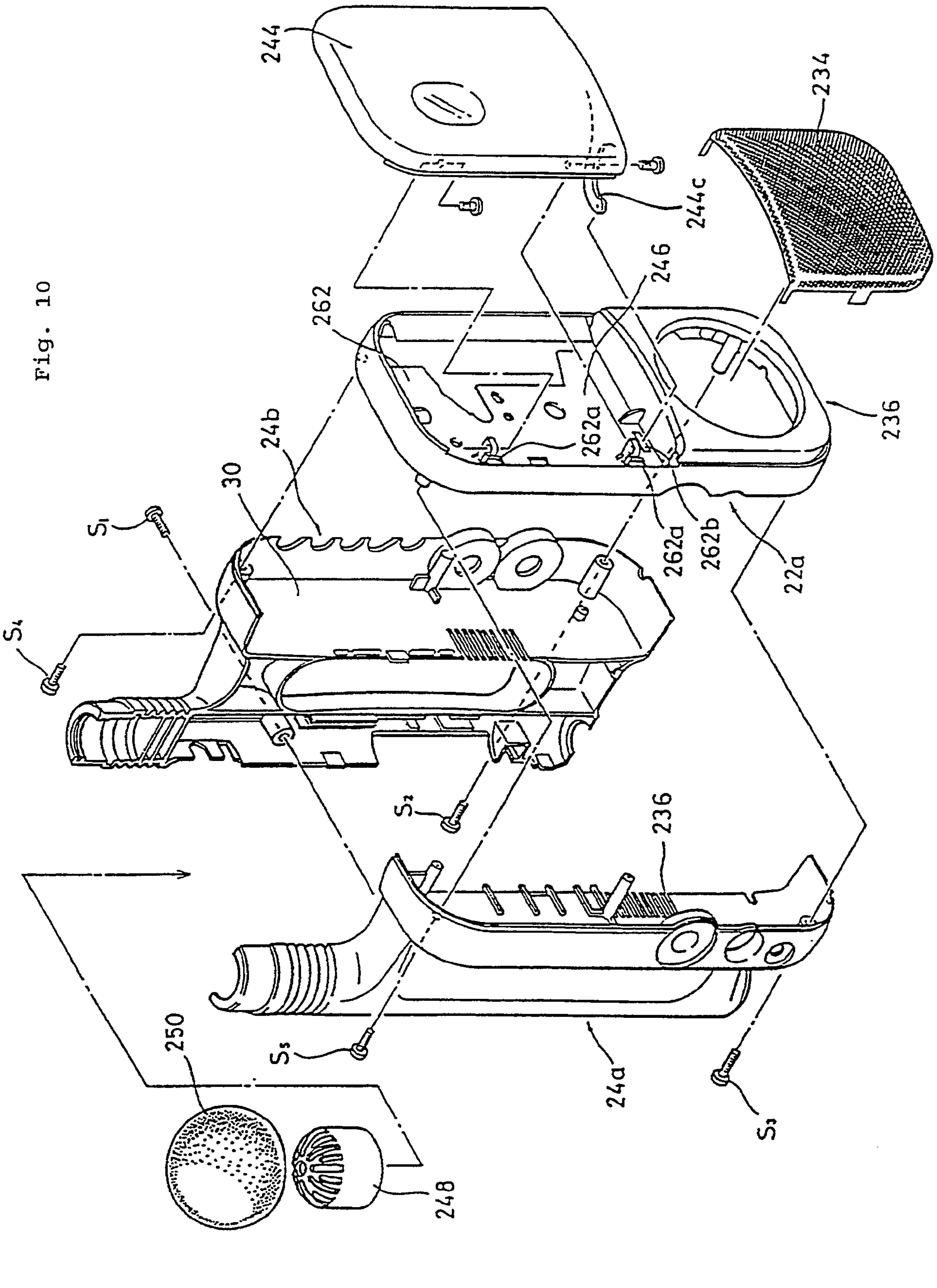
244
234
244c
246
262
262a
236
24b
30
$S_1$
$S_4$
262a
262b
22a
$S_2$
236
250
$S_5$
24a
$S_3$
248

Fig. 11

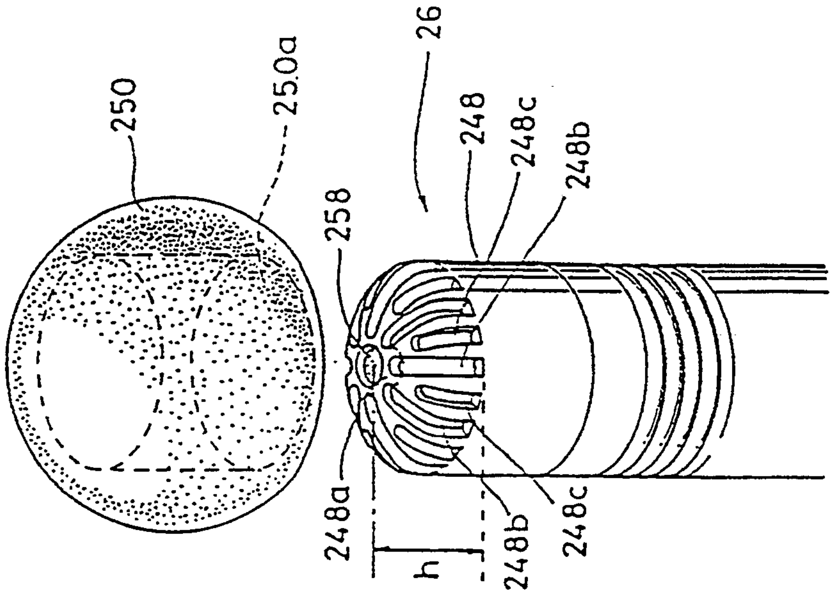

250
250a
26
248
248c
248b
258
248a
h
248b
248c


Fig. 12

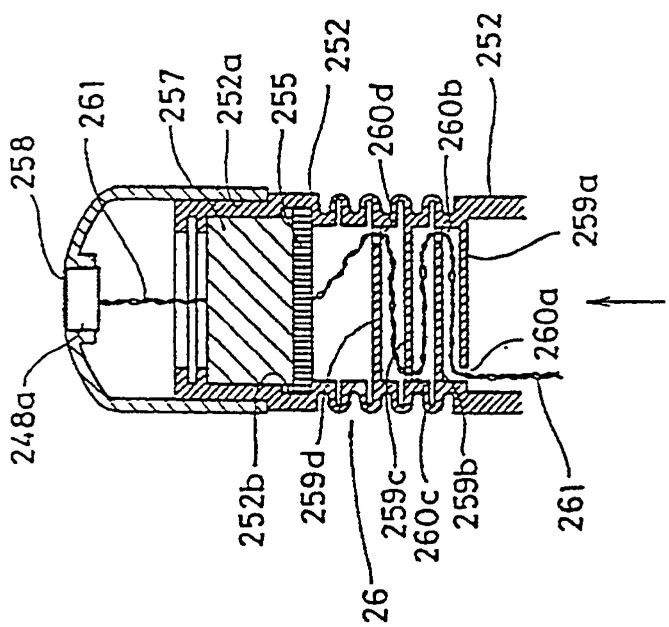

258
261
257
252a
255
252
260d
260b
252
259a
260a
248a
252b
259d
259c
260c
259b
261
26

Fig. 14

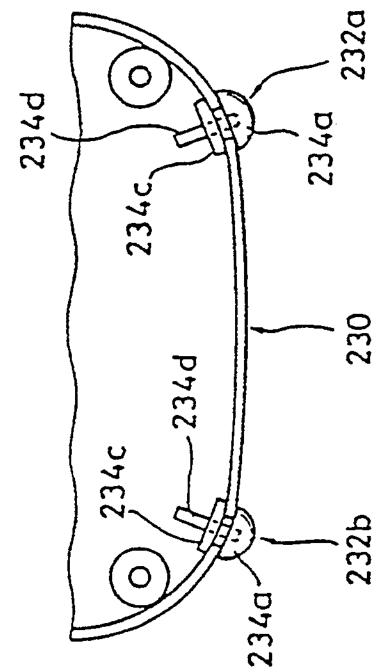

232a
234d
234a
234c
230
234d
234c
232b
234a


Fig. 13

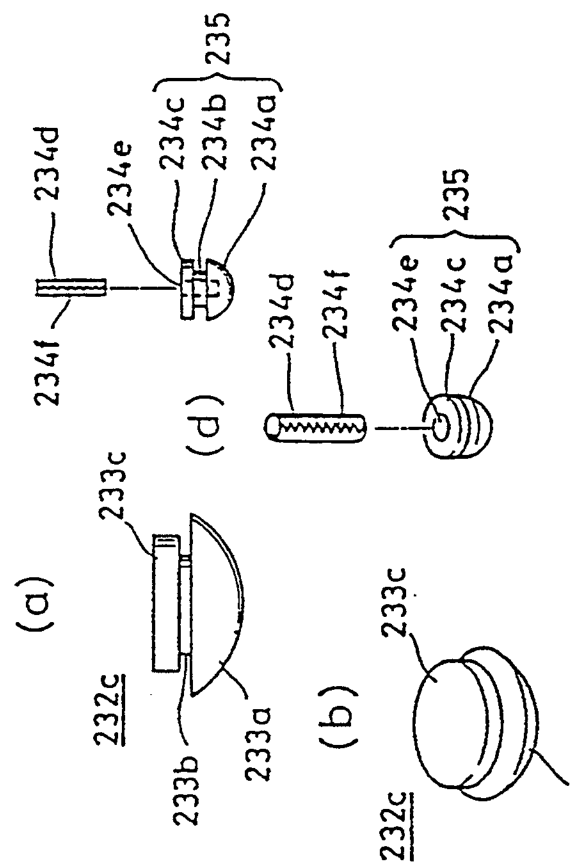

(c)
234d
234e
234c
234b
234a
235
234f
(d)
234d
234f
234e
234c
234a
235
(a)
233c
232c
233b
233a
(b)
233c
232c
233a

Fig. 15

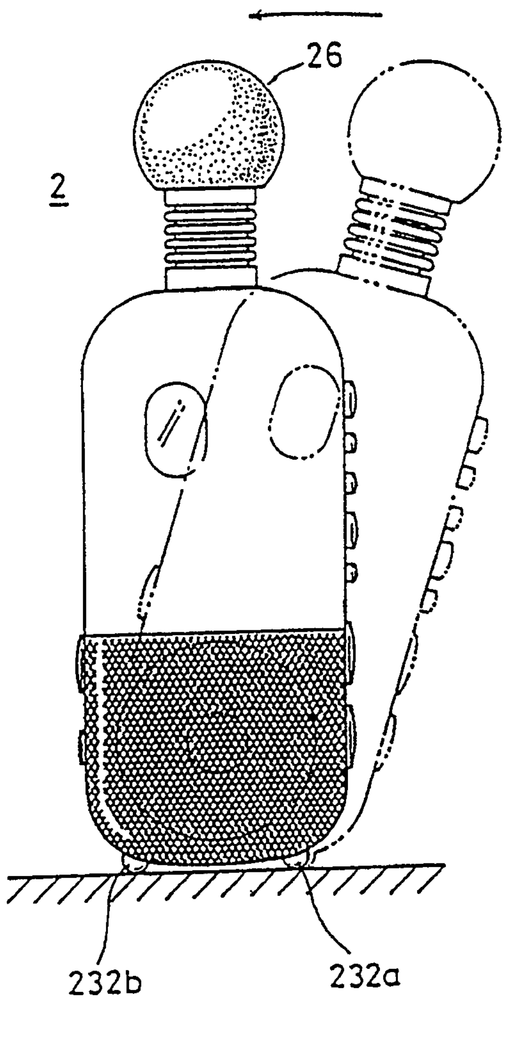

Fig. 16

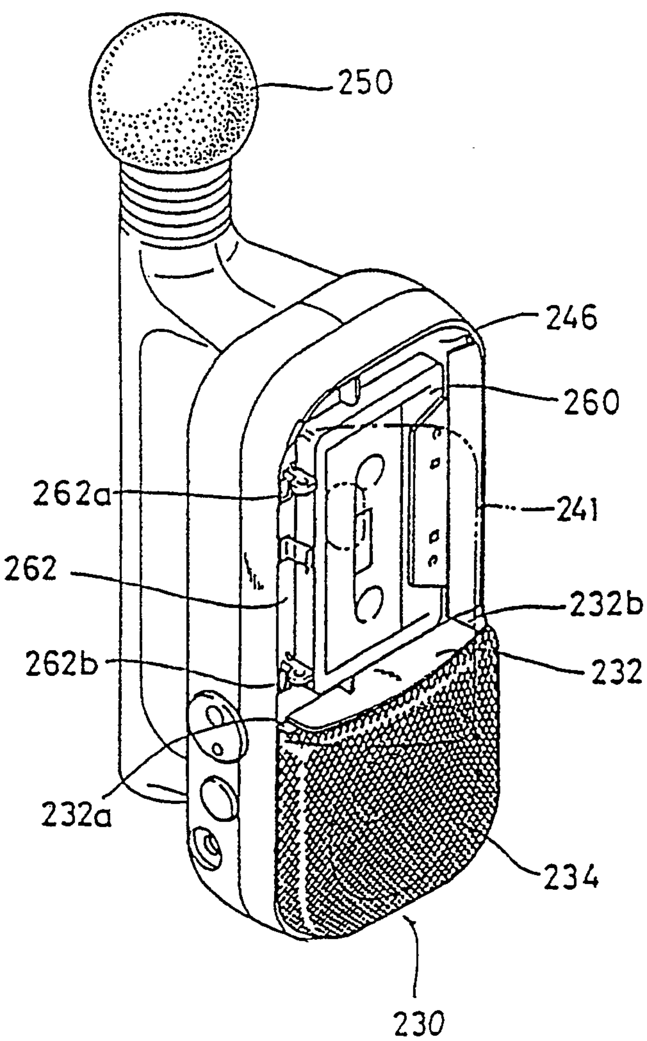

Fig. 17

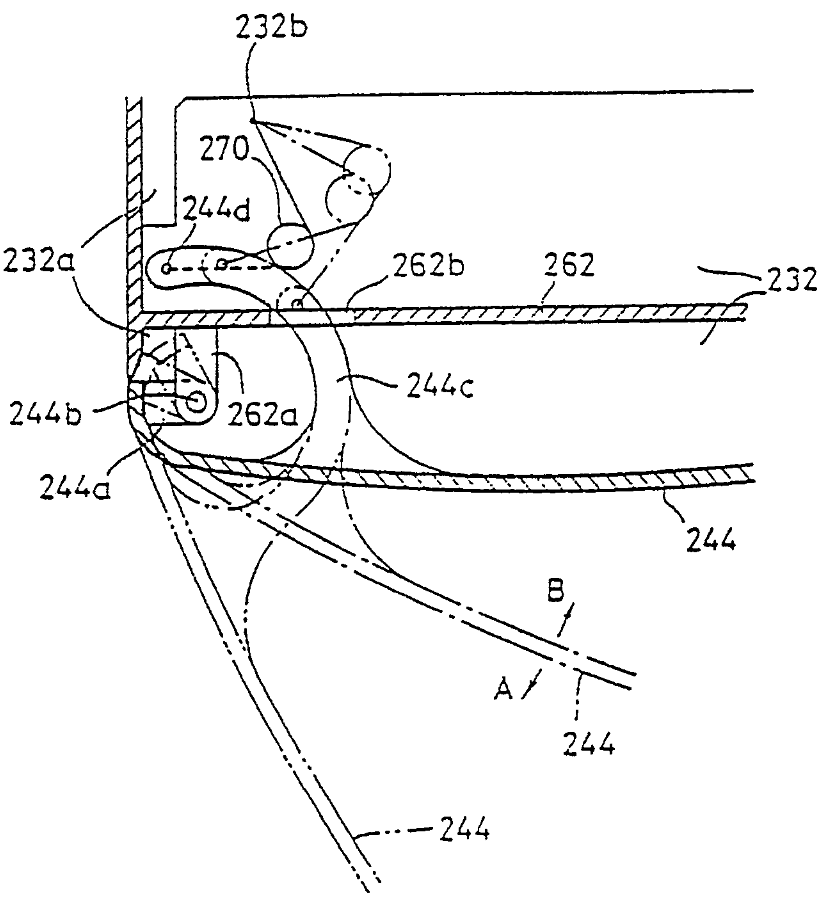
232b
270
244d
232a
262b
262
232
244b
262a
244c
244a
244
B
A
244
244

Fig. 18

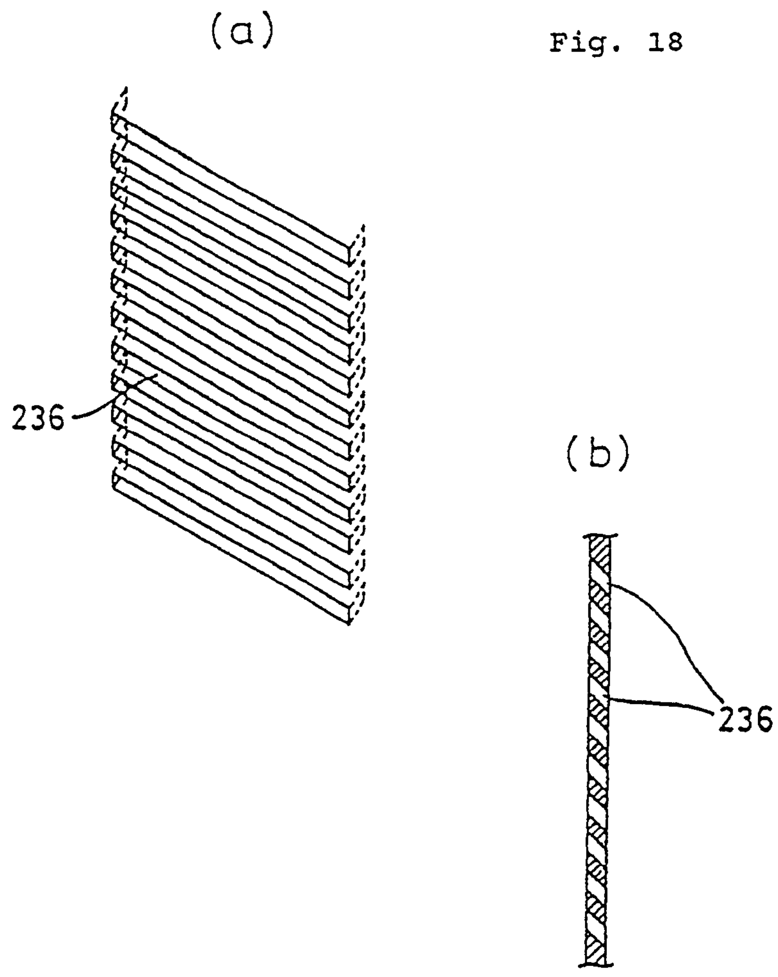

Fig. 19

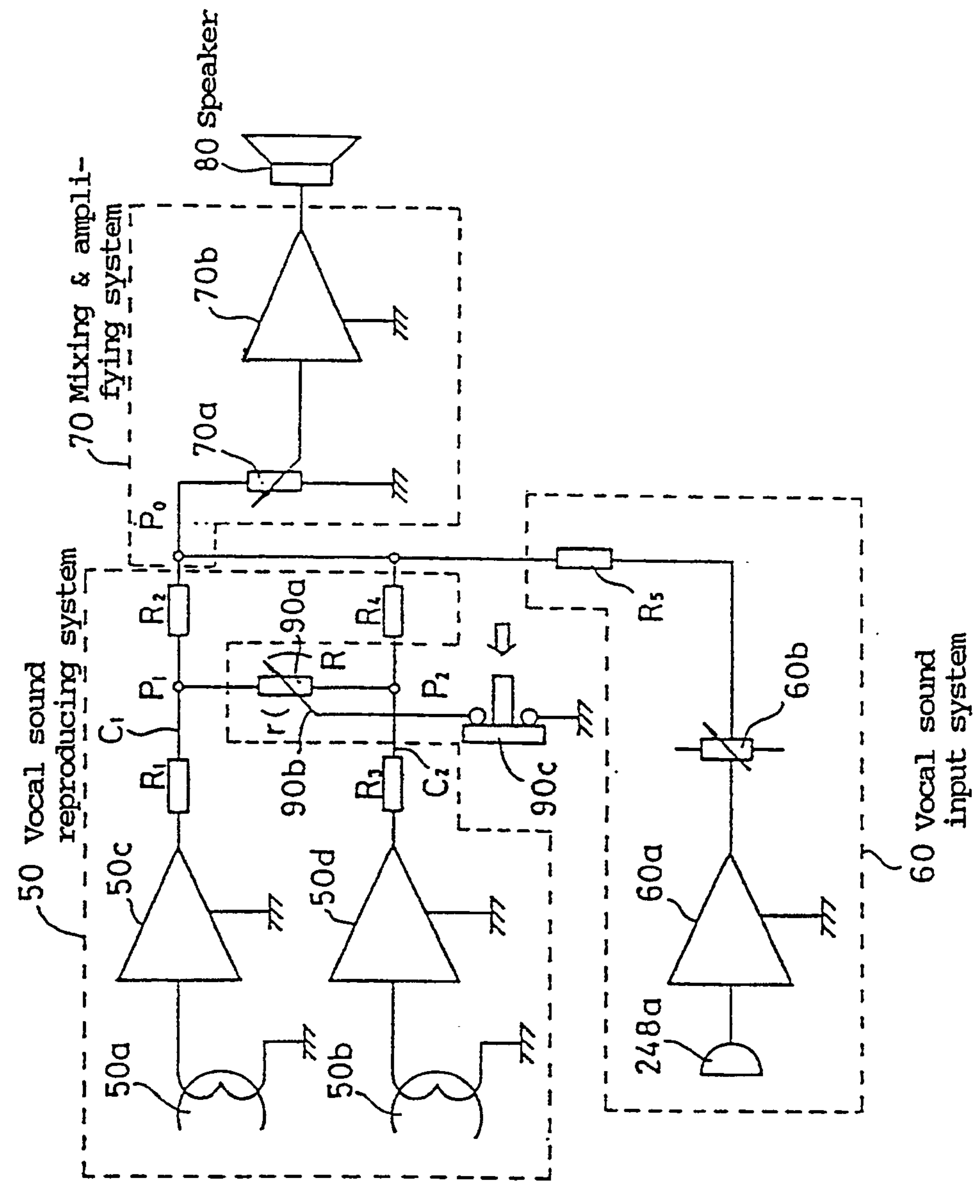
80 Speaker
70 Mixing & ampli-
fying system
70a
70b
$P_0$
$R_2$
$R_4$
90a
R
r
$P_1$
$P_2$
$C_1$
$C_2$
$R_1$
$R_3$
90b
90c
$R_5$
50 Vocal sound
reproducing system
50c
50d
50a
50b
60b
60a
248a
60 Vocal sound
input system

Fig. 20

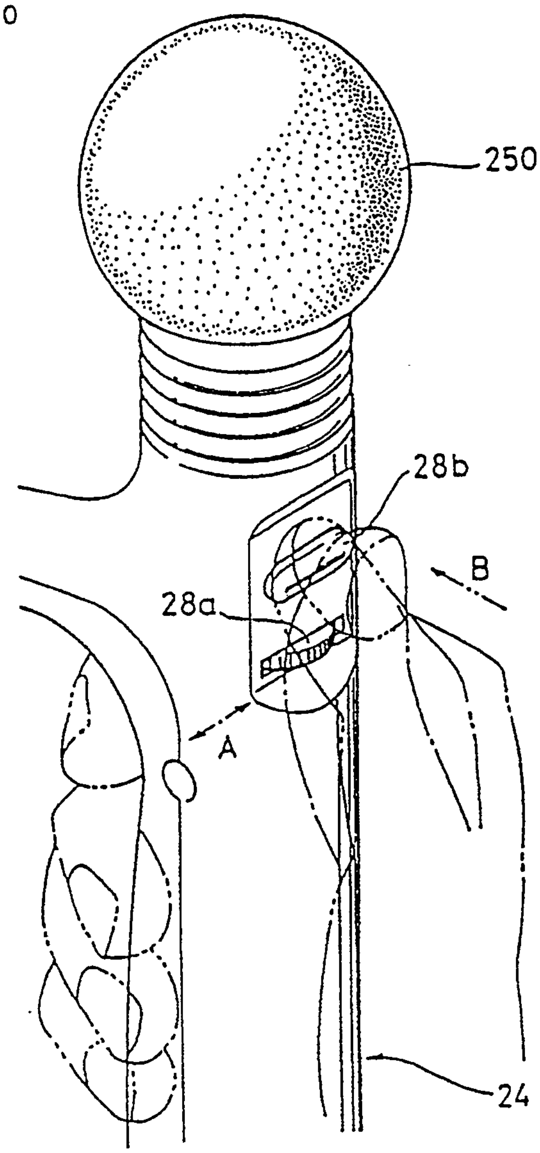

Fig. 21

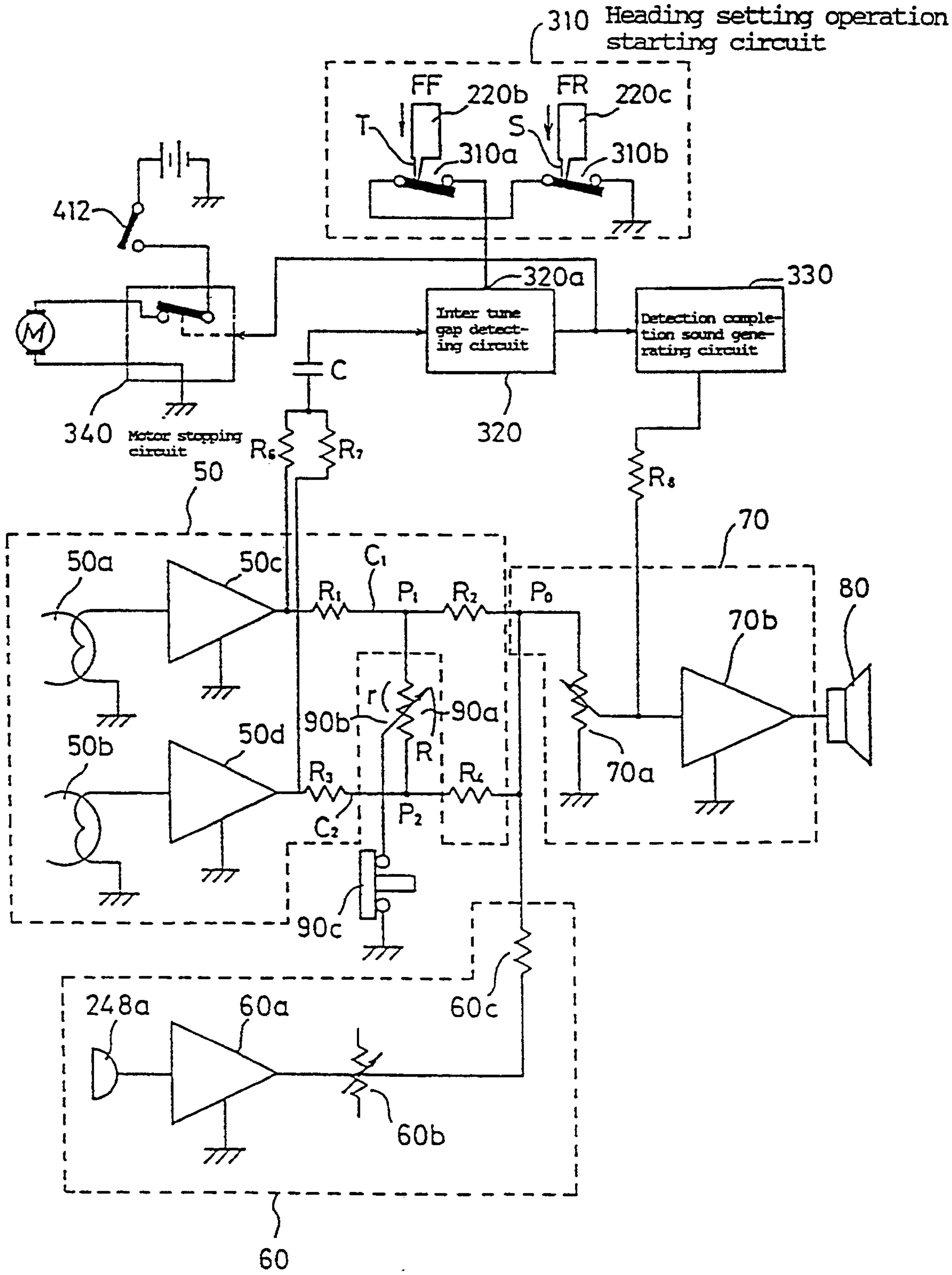
310 Heading setting operation starting circuit
FF
220b
FR
220c
T
S
310a
310b
412
320a
330
Inter tune gap detecting circuit
Detection completion sound generating circuit
C
340
Motor stopping circuit
320
R6
R7
R8
50
70
50a
50c
C1
R1
P1
R2
P0
80
70b
r
90b
90a
R
50b
50d
R3
R4
70a
C2
P2
90c
248a
60a
60c
60b
60

Fig. 22

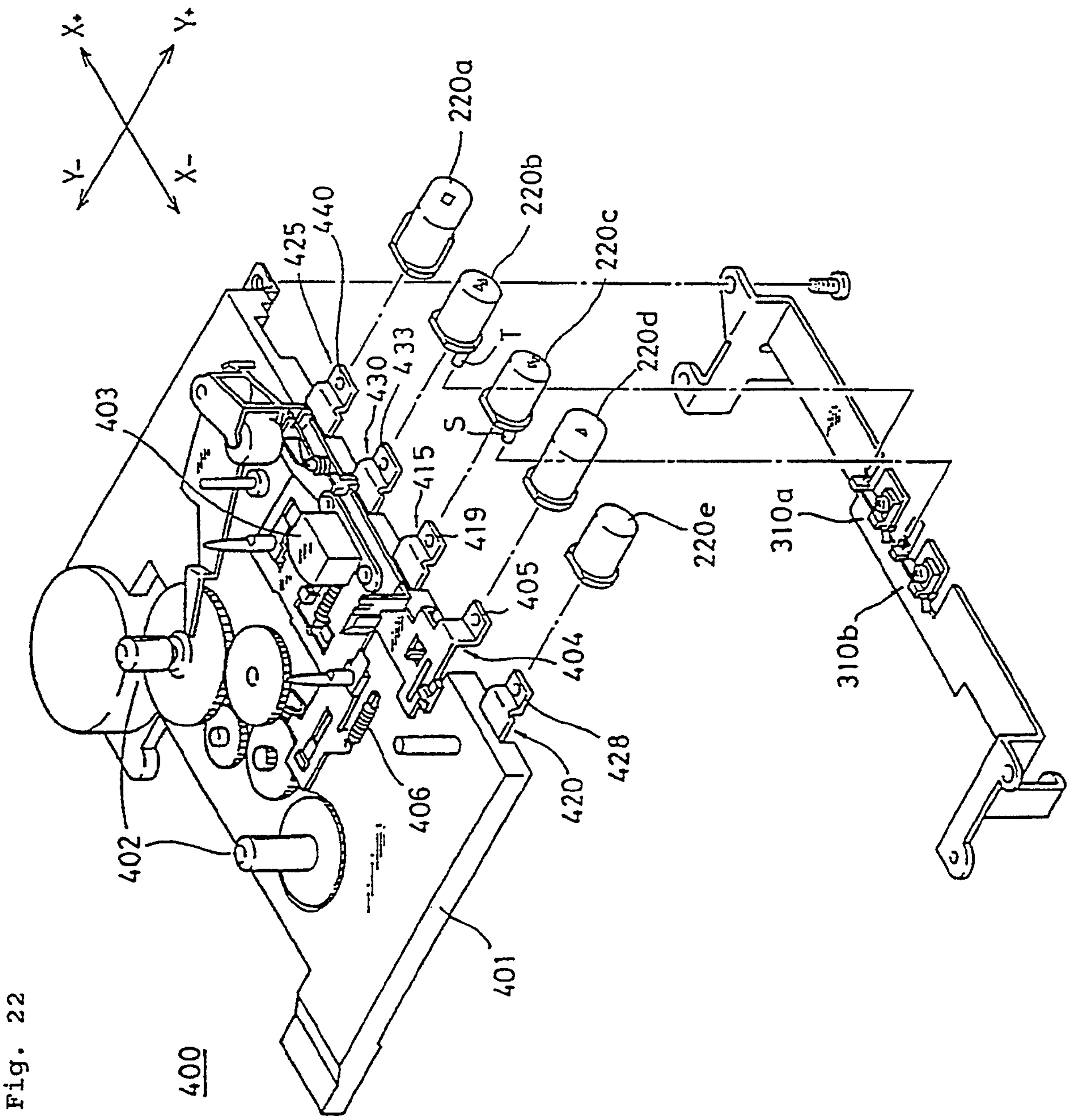
X+
Y+
Y-
X-
220a
220b
220c
220d
220e
440
425
430
433
T
S
403
415
419
405
404
428
420
310a
310b
406
402
401
400

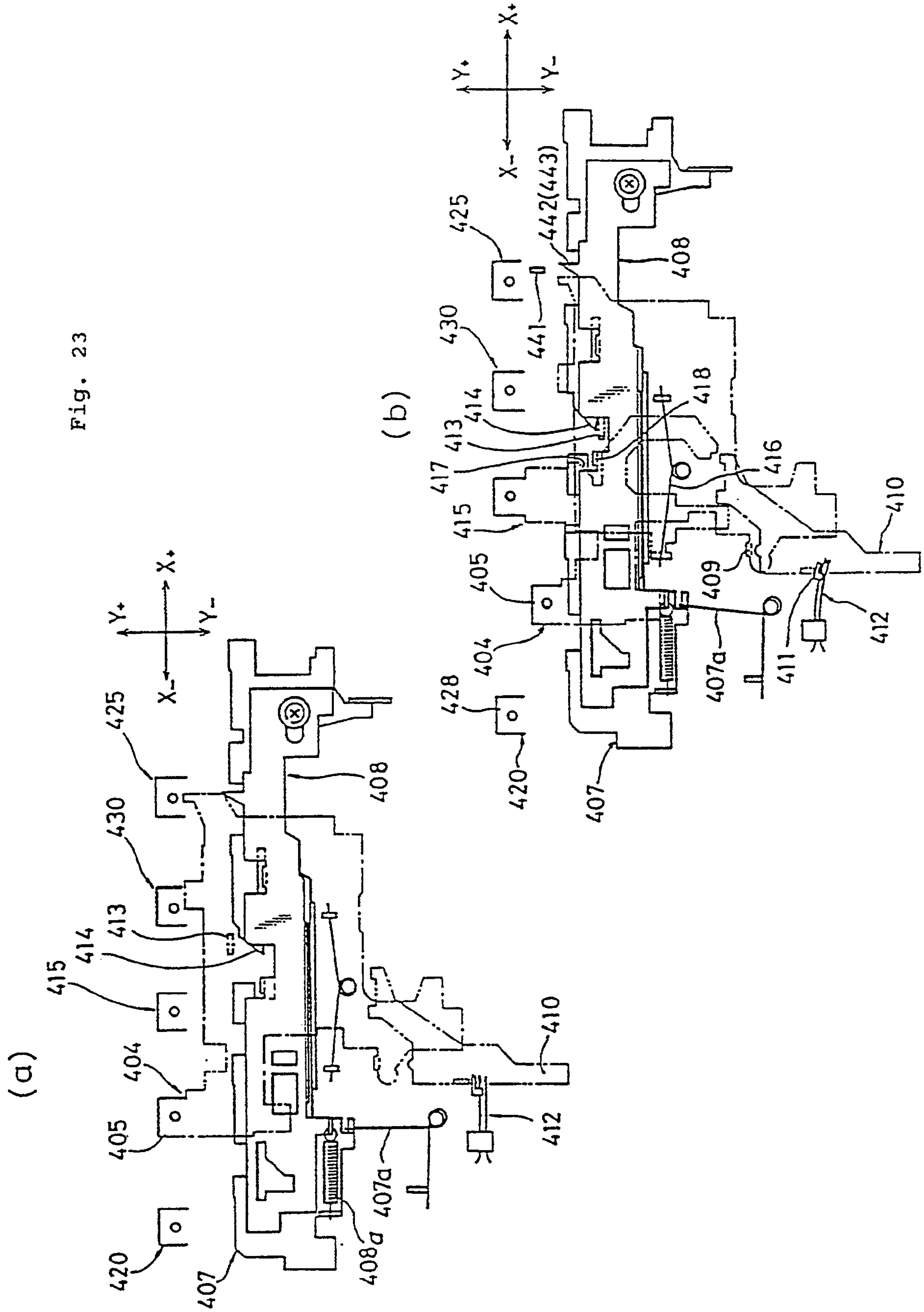
(a)
(b)
X+
X-
Y+
Y-
404
405
407
407a
408
408a
409
410
411
412
413
414
415
416
417
418
420
425
428
430
441
442(443)

Fig. 23

Fig. 23

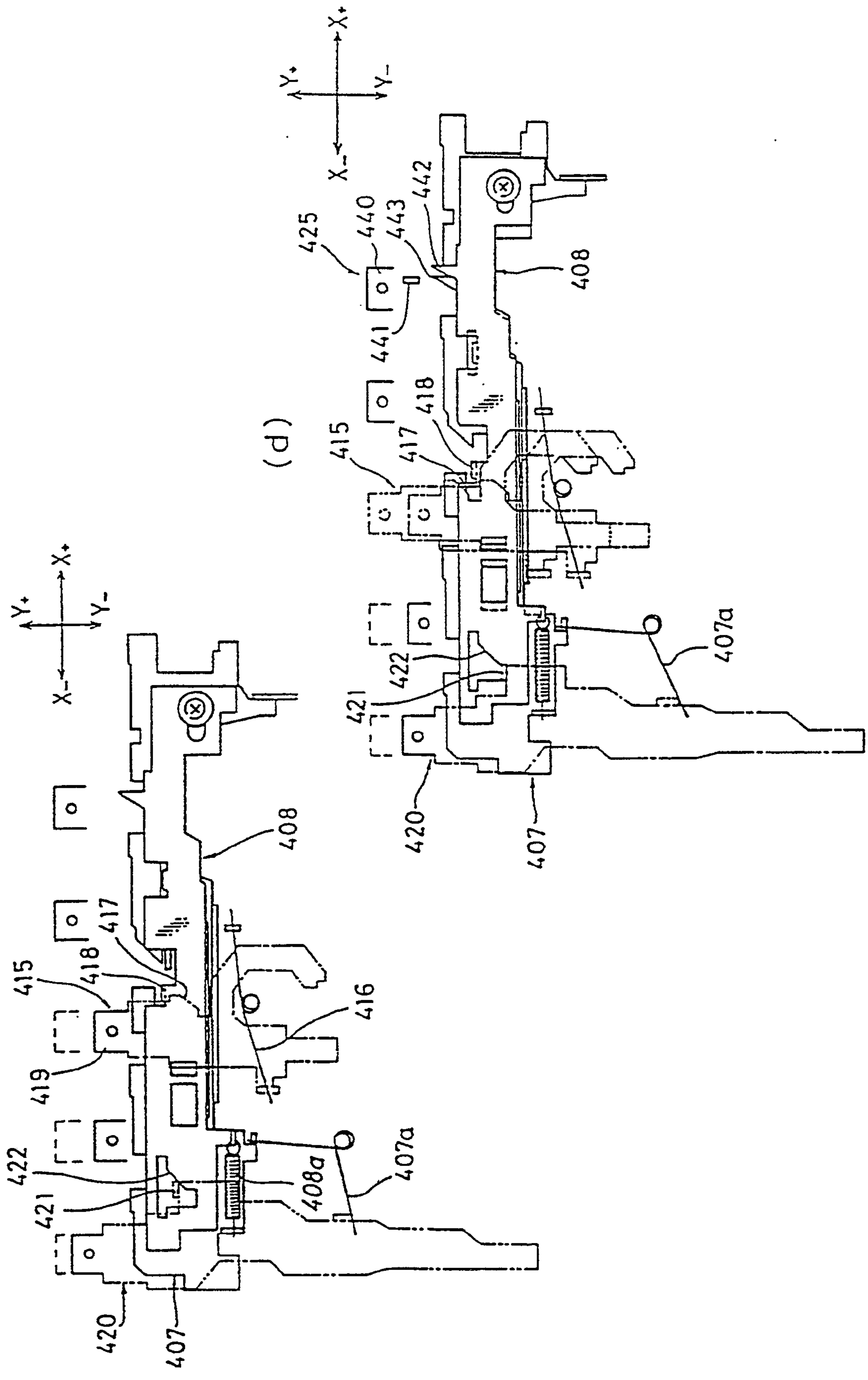
(c)
(d)
X+
X-
Y+
Y-
408
417
418
415
419
416
422
421
408a
407a
420
407
425
440
441
442
443

Fig. 23